(19) Europäisches Patentamt
European Patent Office
Office européen des brevets

(11) EP 2 289 737 B1

(12) # FASCICULE DE BREVET EUROPEEN

(45) Date de publication et mention de la délivrance du brevet:
**25.04.2018 Bulletin 2018/17**

(51) Int Cl.:
***B60Q 1/14*** *(2006.01)* ***B60Q 1/08*** *(2006.01)*
***H05B 39/04*** *(2006.01)*

(21) Numéro de dépôt: **10172190.0**

(22) Date de dépôt: **06.08.2010**

(54) **Dispositif et procédé de commande de l'alimentation d'un projecteur**

Vorrichtung bzw. Verfahren zur Steuerung der Stromversorgung eines Scheinwerfers

Device and method for controlling the power supply of a headlamp

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **26.08.2009 FR 0955818**
**25.03.2010 FR 1052191**

(43) Date de publication de la demande:
**02.03.2011 Bulletin 2011/09**

(73) Titulaire: **VALEO VISION**
**93012 Bobigny (FR)**

(72) Inventeurs:
- **Le Bars, Jean-François**
**89275, ELCHINGEN (DE)**
- **Wiegand, Boris**
**78467, KONSTANZ (DE)**
- **Blusseau, Eric**
**49000, ANGERS (FR)**

(56) Documents cités:
**EP-A1- 1 566 990** **EP-A1- 1 800 948**
**DE-A1-102005 014 754** **DE-A1-102006 021 694**
**DE-A1-102006 022 022** **US-A1- 2008 007 961**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 289 737 B1

Printed by Jouve, 75001 PARIS (FR)

## Description

L'invention concerne un dispositif pour commander l'alimentation électrique d'un projecteur de véhicule. L'invention concerne également un projecteur d'éclairage pour véhicule automobile ainsi qu'un procédé de commande d'alimentation d'un tel projecteur.

L'invention trouve son application dans le domaine automobile et, en particulier, dans le domaine de l'éclairage pour véhicules automobiles pour l'alimentation électrique des lampes à incandescence ou de diodes électroluminescentes dans les projecteurs d'éclairage de véhicules.

Dans le domaine de l'éclairage automobile, il existe différents types de fonction d'éclairage parmi lesquelles on trouve essentiellement :

- des feux de position, d'intensité et de portée faibles. Cette fonction est principalement destinée à signaler la présence du véhicule par luminosité et visibilité moyennes ;
- des feux de croisement, ou codes, d'intensité plus forte et de portée sur la route avoisinant généralement les 70 mètres. Cette fonction est essentiellement utilisée la nuit. Elle se caractérise par une répartition lumineuse présentant, au moins dans une zone, un fort gradient lumineux de sorte à ne pas éblouir les conducteurs précédés ou arrivant en sens inverse;
- des feux de route, avec une longue portée avoisinant typiquement les 200 mètres. Cette fonction est utilisée pour éclairer la route au loin et permettre au conducteur d'appréhender la trajectoire du véhicule;
- des feux antibrouillard.

Les documents DE 10 2006 022022 A1, EP 1 566 990 A1, et EP 1 800 948 A1 décrivent des procédés de sélection de fonction d'éclairage.

Actuellement, il existe des dispositifs de projection de lumière, ou projecteurs, qui assurent la fonction de code et la fonction route. Ces projecteurs sont généralement appelés projecteurs bi-fonctions.

Le document DE 10 2006 021694 A1 divulgue un procédé de passage automatique d'un feu code à un feu de route.

Un tel projecteur bi-fonction comporte une source lumineuse émettant un flux lumineux identique quel que soit le mode de fonctionnement (route ou code). Il comporte généralement un cache amovible apte à assurer une coupure du faisceau lumineux. Ce cache est, par exemple, un volet métallique pouvant être dans une première position ou une deuxième position. Dans la première position, le cache n'occulte pas le faisceau lumineux produit par la source lumineuse, ou lampe, du projecteur. Dans la seconde position, le cache occulte partiellement le faisceau lumineux produit par la lampe du projecteur. Dans cette seconde position, on dit que le cache réalise une coupure spécifique du faisceau lumineux, cette coupure spécifique correspond à la coupure du faisceau lumineux nécessaire pour obtenir la fonction code. Ainsi, l'éclairage en mode code ou en mode route se différencie par la présence ou non de la coupure.

Dans les projecteurs bi-fonctions actuels, la source lumineuse peut être une lampe halogène. Cette lampe halogène est généralement alimentée par une tension fixe, qui est généralement la tension nominale de la lampe spécifiée, par les fabricants de lampes, pour chaque type de lampe. Cette tension nominale est bien souvent la tension d'alimentation pour laquelle le fonctionnement de la lampe remplit les exigences réglementaires.

Les constructeurs de lampes, en plus d'indiquer une tension nominale, indiquent une durée de vie moyenne pour les lampes. Typiquement, la durée de vie d'une lampe de type H7 est d'environ 900 heures à 13,2V.

Cependant, il s'avère en pratique que la durée de vie moyenne des lampes est souvent significativement inférieure à celle indiquée par les fabricants du fait de la tension du réseau de bord du véhicule, qui est souvent supérieure à la tension nominale de la lampe. En fin de durée de vie, une nouvelle lampe doit être achetée et réinstallée dans le projecteur. Cette opération est de plus en plus compliquée à effectuer par l'utilisateur, ce qui peut entraîner une immobilisation du véhicule et un coût supplémentaire.

Il existe donc un besoin consistant à augmenter la durée de vie réelle des lampes tout en conservant des performances d'éclairage satisfaisantes.

En outre, il existe un besoin consistant à réduire l'énergie consommée par un projecteur pour l'éclairage du véhicule. Un procédé de commande de l'alimentation d'un projecteur selon le préambule de la revendication 1 et un dispositif de commande de l'alimentation d'un projecteur selon le préambule de la revendication 8 sont connus de US 2008/0007961.

L'invention vise à apporter une solution à l'un au moins des besoins exprimés précédemment.

A cet effet, on prévoit selon la présente invention un procédé de commande de l'alimentation d'un projecteur de véhicule selon la revendication 1. Ainsi, on adapte le mode d'alimentation du projecteur en fonction de modes d'éclairage et donc de situations de conduite. Par conséquent, on module la consommation énergétique du projecteur ce qui permet d'allonger la durée de vie des sources de lumière et/ou de réduire l'émission de $CO_2$ du projecteur en fonction des situations de conduite. Le procédé de commande peut comprendre une étape d'adaptation du mode d'alimentation du projecteur en fonction de ces modes d'éclairage, donc une adaptation de l'éclairage en fonction de ces modes d'éclairage.

Selon l'invention, chaque mode d'alimentation du projecteur correspond à une tension donnée appliquée au projecteur et/ou correspond à une intensité donnée appliquée au projecteur. Ainsi, selon le mode de conduite identifié, on adapte l'éclairage en modulant la tension et/ou l'intensité appliquée au projecteur.

Il s'est avéré que la tension aux bornes de la lampe impacte directement sa durée de vie. Plus précisément, plus la tension est élevée, plus la durée de vie de la lampe est faible. Par exemple, avec une tension de 13,2 Volts, une lampe H9 a une durée de vie d'environ 4,4 fois inférieure à celle correspondant à une tension de 11,78 Volts, qui est, dans ce cas, de l'ordre de 1100 heures

Par ailleurs, la performance d'une lampe est caractérisée principalement par son flux et par sa luminance. Ces performances, flux et luminances, sont fonctions de la tension aux bornes de la lampe. Ainsi, plus la tension aux bornes de la lampe est élevée et plus le flux et la luminance sont élevés. A titre d'exemple, en considérant la luminance : pour une lampe du type H9 standard, la luminance est de l'ordre de 3400 $cd/cm^2$ pour une tension aux bornes de la lampe de 13,2 Volts et de 3150 $cd/cm^2$ pour une tension de 12,8 Volts.

Autrement dit, l'amélioration de la luminance se fait au détriment de la durée de vie de la lampe.

Dans le cadre du développement de la présente invention, il s'est avéré que dans les projecteurs existants, du fait de la présence de l'alternateur aux bornes de la batterie, la tension s'élève généralement de manière considérable lorsque le moteur tourne. Cette élévation de tension se traduit typiquement par passage de 13,2 Volts à 14 Volts ou plus. Cette élévation de tension en plus d'entraîner une surconsommation, tend à réduire considérablement la durée de vie de la lampe.

En outre, le plus souvent, cette surconsommation ne s'accompagne pas d'un confort ou d'une sécurité de conduite significativement améliorée puisqu'un éclairage satisfaisant est déjà obtenu pour une tension moindre.

L'invention est destinée à résoudre le problème critique de la consommation électrique excessive des lampes halogène d'éclairage automobile en prolongeant la durée de vie des lampes, tout en assurant des performances adéquates des projecteurs dans les conditions de roulage normal et de hautes performances dans les conditions particulières telles que le roulage sur autoroute, l'éclairage en mode « code tournant », ou le freinage par exemple.

L'invention prévoit d'adapter la tension délivrée à la lampe en fonction du mode de conduite alors que le projecteur fonctionne en code ou en route. On a donc plusieurs tensions pour une même fonction d'éclairage. La tension délivrée à la lampe est ainsi choisie de sorte à générer un éclairage satisfaisant tout en limitant un éclairage superflu qui entraînerait une surconsommation, en fournissant à cette dernière une tension inférieure à la tension maximale préconisée et, dans le plus grand nombre possible de cas, inférieure à la tension du réseau de bord du véhicule. Cette tension prend en compte des paramètres internes et externes au véhicule. A titre d'exemple, si une lumière ambiante est présente, on applique une tension inférieure à la tension maximale pour générer un éclairage adéquat. La consommation de la lampe est alors réduite. Sa durée de vie est augmentée. Par ailleurs, la quantité de $CO_2$ émis est également réduite.

Selon l'invention, le projecteur comprend une pluralité de sources de lumière et chaque mode d'alimentation du projecteur définit l'activation ou la désactivation d'au moins une source de lumière indépendamment des autres sources de lumière.

Ainsi, selon la situation de conduite, on détermine un mode de d'éclairage et on adapte l'éclairage en modulant la répartition des sources de lumières activées et des sources de lumière désactivées. On module de ce fait la quantité d'énergie consommée par le projecteur et par conséquent l'émission de $CO_2$ induit par l'éclairage. Selon l'invention, chaque mode d'alimentation du projecteur définit l'activation ou la désactivation de chacune des sources indépendamment de l'activation et de la désactivation des autres sources de lumière. On peut donc adapter de manière très précise la consommation du projecteur. En fonction de la répartition et du nombre des sources activées et des sources non activées, on peut également définir un grand nombre d'éclairages générés par le projecteur.

Selon l'invention, l'éclairage fourni par le projecteur génère un motif lumineux et une intensité lumineuse et les modes d'alimentation sont définis de manière à ce que le motif soit sensiblement identique pour au moins une pluralité de modes d'alimentation et de manière à ce que pour cette pluralité de modes d'alimentation l'intensité lumineuse varie d'un mode d'alimentation à l'autre.

Ainsi on prévoit que dans un mode d'alimentation les sources désactivées et les sources activées sont réparties de sorte à ne pas faire apparaître de variation du motif. La désactivation de certaines sources de lumière n'engendre donc pas de zones noires ou peu éclairées. La perception qu'a le conducteur du motif généré demeure par conséquent constante quel que soit le mode de conduite. En revanche, l'intensité du faisceau varie d'un mode de conduite à l'autre. On peut ainsi réduire significativement la puissance consommée par le projecteur sans perturber fortement le conducteur. Avantageusement, la perception du motif demeure également constante pour les conducteurs des autres véhicules ou pour les piétons.

Selon une variante particulière de réalisation, on prévoit un procédé dans lequel le projecteur comprend une pluralité de sources de lumière et dans lequel chaque mode d'alimentation du projecteur définit la tension ou l'intensité appliquée respectivement à chacune des sources.

De manière facultative, l'invention comprend en outre au moins l'une quelconque des caractéristiques suivantes :

- les sources de lumière du projecteur sont prises parmi les lampes à incandescence, les diodes électroluminescentes ou des modules comprenant une pluralité de diodes électroluminescentes ou une pluralité de lampes.
- ledit au moins un paramètre comprend un paramètre interne au véhicule choisi parmi les paramètres suivants: une vitesse du véhicule, des données de navigation, un régime du moteur du véhicule, la vitesse de rotation d'un volant du véhicule, l'activation des essuie-glaces et des feux anti-brouillard, une valeur d'accélération, une vitesse ou un angle d'actionnement d'une pédale de frein ou d'accélération, l'enclenchement d'une commande actionnable par le conducteur par exemple le choix du mode « Economique ».
- ledit au moins un paramètre comprend un paramètre externe au véhicule choisi parmi les paramètres suivants: luminosité ambiante, luminosité d'un éclairage public, luminosité d'un éclairage naturel, le degrés de pollution (par rapport à une ou plusieurs molécules).
- ledit au moins un paramètre comprend un paramètre externe au véhicule choisi parmi les paramètres suivants: la densité du trafic, le nombre de véhicules dans un périmètre déterminé, la distance par rapport à un véhicule suivi, la vitesse relative et/ou l'accélération par rapport à un véhicule suivi, un véhicule suiveur ou un véhicule croisé, la couleur d'une ligne de marquage au sol, la signification d'un panneau de signalisation, la présence d'un obstacle, l'arrivée à un croisement ou à un rond-point, la présence d'un environnement urbain, la présence d'un éclairage public, la détection d'un obstacle, la présence d'un feux rouge ou encore la présence de brouillard, de pluie, de neige ou de fumée, la détection d'un obstacle.
- ledit au moins un paramètre comprend un paramètre qui traduit une densité de trafic, la densité de trafic étant déterminée par des données de navigation reflétant la densité de trafic. Par exemple, on prévoit qu'un véhicule équipé d'un système de navigation reçoit une information indiquant que le véhicule est localisé dans un embouteillage. Le dispositif identifie alors que le véhicule est dans un mode de conduite en embouteillage et commande alors une diminution de la puissance appliquée au projecteur. Alternativement, la densité de trafic est déterminée par des données de navigation reflétant la vitesse du véhicule combinée à au moins un sous paramètre pris parmi : la distance par rapport à un véhicule suivi, le nombre de véhicules dans un périmètre déterminé, des données de navigation relatives à la densité de trafic. Par exemple, le mode de conduite en embouteillage est identifié à condition que les données issues du système de navigation détectent un embouteillage et à condition que la vitesse du véhicule soit inférieure à 90 Km/h. Ainsi, cette identification du mode de conduite peut être subordonnée à la vérification d'un autre paramètre tel que la vitesse du véhicule.
- pour attribuer les tensions d'alimentation ou pour définir le nombre et la répartition des sources activées et désactivées on prend en compte une combinaison des paramètres suivants au moins: vitesse du véhicule et luminosité ambiante. Ces paramètres sont en effet particulièrement pertinents pour établir une stratégie d'éclairage.
- pour chacune des fonctions code et route on définit plusieurs modes d'éclairage. De manière non limitative, chaque modes d'éclairage est caractérisé par les valeurs d'au moins deux paramètres.
- lors de l'utilisation du véhicule on effectue les étapes suivantes : on reçoit des valeurs relatives audit paramètre ; on identifie parmi la pluralité de modes d'éclairage le mode d'éclairage correspondant à ces valeurs ; on détermine un mode d'alimentation du projecteur en fonction dudit mode d'éclairage. Par exemple, on augmente la tension d'alimentation ou on augmente le nombre de sources de lumière activées en fonction d'une augmentation de la vitesse du véhicule et/ou en fonction d'une diminution de la luminosité ambiante et/ou en fonction d'une augmentation d'un angle de rotation du volant.
- les valeurs relatives audit paramètre sont issues de un ou plusieurs capteurs pris parmi les capteurs suivants : un radar, un lidar, une caméra.
- la caméra est configurée pour détecter au moins l'un parmi :
    - le nombre de véhicules à proximité dudit véhicule,
    - la distance entre ledit véhicule et au moins un véhicule suivi,
    - la vitesse absolue du véhicule équipé de la caméra,
    - la vitesse relative et/ou l'accélération par rapport à véhicule suivi, un véhicule suiveur ou un véhicule croisé.
    - la couleur d'une ligne de marquage au sol,
    - la signification d'un panneau de signalisation,
    - l'intensité d'une luminosité ambiante,
    - la présence d'un environnement urbain,
    - la présence de lampadaires,
    - un obstacle,
    - l'allumage d'un feu de stop d'un véhicule suivi.

De préférence, la caméra est située à l'avant du véhicule.

Avantageusement, une même caméra peut être configurée pour détecter plusieurs des modes de conduite décrits ci-dessus. De manière alternative ou cumulée, le ou les paramètres détectés avec la caméra son combinés avec d'autres paramètres non issus de la caméra tels que la vitesse de rotation des roues, des données de navigation etc. Cela permet, lors du paramétrage du dispositif, de définir avec précision un grand nombre de modes de conduite correspondant chacun à un mode d'éclairage. Lors de l'utilisation de l'invention, cela permet également d'augmenter le coefficient de confiance associé au mode de conduite identifié en phase de roulage.

L'utilisation d'une caméra est particulièrement avantageuse puisqu'elle présente un coût limité. Ce coût est encore réduit dans le cas où la caméra assure des fonctions indépendantes de celles requises dans le cadre de la présente invention.

- de manière avantageuse, on définit les modes d'alimentation en effectuant les étapes suivantes :
    - on définit une durée de vie souhaitée pour le projecteur et/ou une consommation énergétique maximale souhaitée du projecteur pour une durée donnée d'utilisation du projecteur,
    - on définit un profil de conduite prédéterminé caractérisé par une durée relative d'utilisation du projecteur dans chacun des modes d'éclairage,
    - on calcule pour chaque mode d'éclairage un mode d'alimentation de manière à ce qu'avec ce mode d'alimentation le projecteur assure un éclairage satisfaisant pour ce mode d'éclairage tout en présentant une durée de vie proche de la durée de vie souhaitée et/ou tout en induisant une consommation énergétique proche de la consommation énergétique maximale souhaitée pour une utilisation correspondant au profil de conduite prédéterminé.

Ainsi, en identifiant des modes d'éclairage qui ne nécessitent pas un éclairage trop puissant, on réduit une consommation superflue et/ou on accroît la durée de vie de la lampe du projecteur.

Avantageusement, on identifie si le profil réel de conduite du conducteur s'éloigne au-delà d'un certain seuil du profil de conduite prédéterminé. Si tel est le cas, on recalcule alors pour chaque mode d'éclairage un nouveau mode d'alimentation. Ce nouveau mode d'alimentation est recalculé de manière à ce qu'avec ce nouveau mode d'alimentation, la durée de vie du projecteur et/ou la consommation énergétique du projecteur, et donc l'émission de CO2 demeure sensiblement constante pour ce profil de conduite du conducteur.

Selon un autre objet de l'invention, on prévoit un dispositif de commande de l'alimentation d'un projecteur de véhicule selon la revendication 8. Dans le cas où le projecteur comprend une pluralité de sources de lumière telles que des diodes électroluminescentes, le dispositif selon l'invention permet d'activer un nombre de sources pertinent pour le mode d'éclairage de la situation de conduite en cours. Ce nombre de sources est suffisamment élevé pour assurer un éclairage satisfaisant et suffisamment limité pour ne pas générer un éclairage superflu. L'invention permet ainsi de réduire la consommation du projecteur et par là même, de réduire l'émission de $CO_2$, tout en assurant des conditions d'éclairage satisfaisantes.

De manière facultative, le dispositif selon l'invention comprend en outre au moins l'une quelconque des caractéristiques suivantes :

- le dispositif comprend au moins l'un parmi les moyens suivants configurés pour recevoir le au moins un paramètre pertinent pour l'éclairage du véhicule :
    - des moyens de détection du nombre de véhicules à proximité dudit véhicule,
    - des moyens de détection de la distance entre ledit véhicule et au moins un véhicule suivi,
    - des moyens de détection de la vitesse absolue dudit véhicule,
    - des moyens de détection de la vitesse relative et/ou de l'accélération dudit véhicule par rapport à véhicule suivi, un véhicule suiveur ou un véhicule croisé,
    - des moyens de détection de la couleur d'une ligne de marquage au sol,
    - des moyens de détection de la signification d'un panneau de signalisation,
    - des moyens de détection et de mesure de la luminosité ambiante,
    - des moyens de détection de la présence d'un environnement urbain,
    - des moyens de détection de la présence de lampadaires,
    - des moyens de détection d'un obstacle,
    - des moyens de détection de l'allumage de feux de stop d'un véhicule suivi.
- lesdits moyens comprennent une caméra agencée pour recevoir le au moins un paramètre pertinent pour l'éclairage du véhicule.

- de manière alternative ou additionnelle à la présence d'une caméra, le dispositif comprend un radar ou un lidar configuré pour recevoir le au moins un paramètre pertinent pour l'éclairage du véhicule, le paramètre étant pris parmi les paramètres suivant :

    - le nombre de véhicules à proximité dudit véhicule,
    - la détection d'un véhicule suivi,
    - la distance à un entre ledit véhicule et un véhicule suivi,
    - la vitesse relative et/ou l'accélération par rapport à véhicule suivi, un véhicule suiveur ou un véhicule croisé,
    - la présence d'un obstacle.

- lesdits moyens comprennent un système de localisation du véhicule et un système de réception de données de trafic émise par un centre distant d'observation du trafic.
- le dispositif comprend un contrôleur d'éclairage agencé pour recevoir les valeurs relatives au paramètre et générer la tension d'alimentation.
- le dispositif est agencé pour générer une tension d'alimentation sous forme d'un signal modulé en largeur d'impulsions (PWM).
- le contrôleur d'éclairage comprend une carte électronique de régulation destinée à être implantée dans le projecteur.
- le dispositif comprend un interrupteur configuré pour désactiver le contrôleur si la fonction route est enclenchée par le conducteur. Il se peut en effet que le conducteur ait besoin d'un éclairage puissant quel que soit la situation de conduite. Dans ce cas, s'il enclenche manuellement les feux de route, l'adaptation de la tension d'alimentation que prévoit l'invention ne s'effectue pas. Le projecteur est alimenté par la tension issue de la batterie, elle-même alimentée par l'alternateur. L'interrupteur peut aussi interrompre le calculateur si le conducteur agit sur la commande de frein permettant ainsi l'alimentation directe de la lampe par la tension de bord.

Un profil d'utilisation du véhicule et de ses projecteurs est défini par le constructeur. En fonction de la durée de vie ou la consommation visée, cela permet de calculer les niveaux maximum des différentes tensions.

Dans le cas où le conducteur de véhicule ne suivrait pas le profil défini par le constructeur, un calculateur d'éclairage modifie les niveaux des tensions pour garantir la durée de vie ou la consommation visée.

Par exemple, si le calculateur détecte que le mode de conduite est de 60% en fonction AFS et route, il ajustera les différentes tensions des projecteurs pour dépasser par exemple 1000h de durée de vie pour la lampe.

Le calculateur d'éclairage, souvent positionné dans le calculateur central (body Controller, en anglais) prend en compte tous les paramètres externes et internes au véhicule (navigation, éclairage externe, éclairage public, vitesse, régime moteur) ainsi que les souhaits du conducteur (mode de conduite et consommation « Economique »), pour générer la tension PWM optimale d'alimentation des lampes de sorte à améliorer les performances si besoin et/ou à réduire l'émission de $CO_2$ du véhicule pour atteindre uniquement le niveau réglementaire d'éclairage.

Dans le cadre de l'invention, on prévoit également un projecteur d'éclairage pour véhicule comprenant un dispositif de commande d'alimentation selon la présente invention. Ce projecteur est apte à recevoir au moins une source de lumière.

De manière facultative, les sources de lumières sont des diodes électroluminescentes individuelles ou des modules comportant une pluralité de diodes électroluminescentes.

D'autres caractéristiques, buts et avantages de la présente invention apparaîtront à la lecture de la description détaillée qui va suivre, et en regard des dessins annexés, donnés à titre d'exemples non limitatifs et sur lesquels :

- la figure 1 représente schématiquement un projecteur de véhicule automobile classique.
- la figure 2 représente schématiquement un projecteur et un exemple de dispositif d'alimentation d'une lampe de projecteur selon l'invention.
- la figure 3 représente un tableau illustrant un exemple de définition de modes d'éclairage avec les tensions d'alimentation qui leur sont associées.
- les figures 4 et 5 représentent chacune schématiquement un projecteur et un autre exemple de dispositif d'alimentation d'une lampe de projecteur selon l'invention dans lequel plusieurs capteurs sont utilisés pour déterminer le mode d'alimentation du projecteur.
- la figure 6 représente quatre faisceaux élémentaires issus respectivement d'une source de lumière.
- la figure 7 représente deux faisceaux complexes issus respectivement de quatre sources de lumière et de deux sources de lumière.

Sur la figure 1, on a représenté un exemple de projecteur 10 de véhicule automobile. Ce projecteur 10 comporte généralement un boîtier 1 fermé par une glace de protection 2. Le projecteur 10 comporte, à l'intérieur du boîtier, un module d'éclairage 3, par exemple un module elliptique. Le module d'éclairage 3 comporte, notamment, une source lumineuse 4, appelée aussi lampe, un réflecteur 5 apte à réfléchir la lumière vers la glace de protection, une lentille 6 apte à projeter la lumière, un cache amovible 7 et des moyens d'alimentation 8 de la lampe.

En référence aux figures 2 et 3, un exemple de mise en oeuvre de l'invention va maintenant être décrit.

La figure 2 fait apparaître les éléments principaux d'un exemple de dispositif de commande de l'alimentation associé à un projecteur 10 équipé d'une lampe 4. Le dispositif comprend une batterie 11 configurée pour alimenter le projecteur 10. La batterie 11 alimente également un contrôleur d'éclairage 12. La fonction du contrôleur d'éclairage, comme cela sera détaillé par la suite, est de fournir une tension d'alimentation de la lampe 4 qui soit adaptée à la situation de conduite de sorte à générer un éclairage suffisant tout en supprimant un éclairage superflu. Le contrôleur permet au final de réduire la consommation de la lampe, de limiter l'émission de $CO_2$ et de prolonger la durée de vie de la lampe.

Le circuit de la figure 2, comprend également une connexion directe entre la batterie 11 et le projecteur 10. Un interrupteur 13 est agencé pour interrompre le contrôleur d'éclairage 12 lorsqu'il est fermé. Lorsque l'interrupteur 13 est fermé, le projecteur 10 est directement alimenté par la batterie 11. L'interrupteur 13 est relié à une commande actionnable par l'utilisateur. Ainsi, lorsque ce dernier souhaite utiliser le projecteur 10 sans adaptation de la tension, il active cette commande. Tel peut être le cas pour effectuer un appel de phare. Sur l'exemple illustré la tension est alors maximale et est de l'ordre de 13,2 Volts (tension du réseau électrique du véhicule, en général proche de 13,2 V).

On prévoit que l'interrupteur est ouvert par défaut. Lorsque l'interrupteur 13 est ouvert, la tension fournie par la batterie 11 passe par le contrôleur d'éclairage 12.

De manière caractéristique à l'invention, le dispositif de commande est équipé d'une mémoire qui comprend une base de données. Cette base de données contient pour au moins la fonction code ou la fonction route plusieurs modes d'éclairage. Avantageusement, elle contient plusieurs modes d'éclairage pour chacune des ces deux fonctions. On précise ici que les modes d'éclairage sont distincts des fonctions d'éclairage code et route.

Un mode d'éclairage est typiquement défini par au moins une valeur ou une plage de valeurs d'un paramètre relatif au véhicule. Plus précisément, ce paramètre est un paramètre pertinent pour l'éclairage du véhicule.

Il peut concerner un paramètre interne au véhicule et être choisi parmi les paramètres suivants en particulier : une vitesse du véhicule, des données de navigation, un régime du moteur du véhicule, la vitesse de rotation d'un volant du véhicule, l'activation des essuie-glaces et des feux anti-brouillard, l'enclenchement d'une commande actionnable par le conducteur par exemple le choix du mode « Economique » et/ou l'activation de la pédale de frein.

L'enclenchement d'une commande par le conducteur peut concerner au moins le choix d'un mode de conduite ayant un rapport direct avec une réduction de la consommation et l'émission de $CO_2$ - mode de conduite normale, sport ou économique, la commande de frein et l'appel de phares.

Il peut également concerner un paramètre externe au véhicule. Il reflète alors l'environnement du véhicule et peut être choisi parmi les paramètres suivantes en particulier : luminosité ambiante, luminosité d'un éclairage public, luminosité d'un éclairage naturel.

Le paramètre externe peut également refléter: le nombre de véhicules dans un périmètre déterminé, la distance par rapport à un véhicule suivi, la vitesse relative et/ou l'accélération par rapport à un véhicule suivi, un véhicule suiveur ou un véhicule croisé, la couleur d'une ligne de marquage au sol, la signification d'un panneau de signalisation, la présence d'un obstacle, l'arrivée à un croisement ou à un rond-point, la présence d'un environnement urbain, la présence d'un éclairage public, la présence d'un feux rouge, la présence de brouillard, de pluie, de neige ou de fumée, la détection d'un obstacle.

De manière avantageuse, un mode d'éclairage est caractérisé par plusieurs paramètres. Puisque ces paramètres reviennent à caractériser une situation de conduite, plus le nombre de paramètre est important, plus la situation de conduite est caractérisée avec précision et meilleure sera la pertinence de l'alimentation fournie à la lampe. Ainsi, la densité de trafic peut être déterminée par des données de navigation reflétant la densité de trafic ou par la vitesse du véhicule combinée à au moins un sous paramètre pris parmi : la distance par rapport à un véhicule suivi, le nombre de véhicules dans un périmètre déterminé, des données de navigation reflétant la densité de trafic.

Le tableau de la figure 3 illustre différents modes d'éclairage, dont les dénominations apparaissent sur la première ligne de chaque colonne à partir de la deuxième colonne. Les paramètres sont listés dans la première colonne. Les cellules du tableau indiquent les valeurs des paramètres qui caractérisent le mode d'éclairage de la colonne considérée.

Sur cet exemple, un éclairage inférieur à un premier seuil indique qu'il fait nuit, tandis qu'un éclairage compris entre les seuils 1 et 2 indique le crépuscule. Le capteur de fréquences autour de 100 Hz détecte la présence de lumière artificielle. Afin de simplifier l'exemple, les paramètres relatifs à la vitesse du volant, l'information de navigation et l'information d'accélération et de freinage n'ont pas été prises en compte.

De préférence, on impose à l'alimentation du projecteur une temporisation pour ne pas réagir à des changements trop brefs de modes d'éclairage détectés afin de ne pas perturber le conducteur et les autres véhicules. Dans l'exemple de la figure 3, la tension relative à un mode détecté n'est appliquée que si les valeurs correspondent à ce mode pendant plus de cinq secondes, sauf pour la commande de freinage pour laquelle le temps de réaction est immédiat.

Ainsi, il apparaît par exemple que le contrôleur présente dans sa mémoire, pour la fonction code, un mode d'éclairage intitulé « Mode ville nuit petite vitesse ». Ce mode d'éclairage est caractérisé par les paramètres suivants : éclairage ambiant détecté inférieur à un seuil 1, une vitesse de moins de 30Km/h et pas de vitesse au volant.

Il apparaît également que le contrôleur présente dans sa mémoire, pour la fonction route, un mode d'éclairage intitulé « Mode route vitesse réduite nuit». Ce mode d'éclairage est caractérisé par les paramètres suivants : éclairage ambiant détecté inférieur à un seuil 1, une vitesse comprise entre 50 et 70Km/h et pas de vitesse au volant.

Sur l'exemple illustré, le contrôleur contient différents modes d'éclairage distincts, reflétant chacun une situation de conduite spécifique. Les modes d'éclairage illustrés en figure 3, sont exposés ci-après :

« Mode ville, nuit, petite vitesse »: en roulant à moins de 30 Km/h avec un éclairage ambiant inférieur au seuil 1 et en détectant un éclairage artificiel, la tension appliquée à la lampe est alors de 10,5 V.

« Mode ville, nuit, vitesse normale »: en roulant entre 30 et 50 Km/h avec un éclairage ambiant inférieur au seuil 1 et en détectant d'éclairage artificiel, la tension appliquée à la lampe est alors de 11,2 V.

« Mode ville, crépuscule, vitesse normale »: en roulant moins de 50 Km/h avec un éclairage ambiant inférieur au seuil 2 et sans détecter d'éclairage artificiel, la tension appliquée à la lampe est alors de 10,5 V.

« Mode code campagne, crépuscule, vitesse réduite »: en roulant entre 50 et 70 Km/h avec un éclairage ambiant inférieur au seuil 2 et sans détecter d'éclairage artificiel, la tension appliquée à la lampe est alors de 11,2 V.

« Mode code campagne, nuit, vitesse réduite»: en roulant entre 50 et 70 Km/h avec un éclairage ambiant inférieur au seuil 1 et sans détecter d'éclairage artificiel, la tension appliquée à la lampe est alors de 12,2 V.

« Mode code campagne, nuit, vitesse normale »,: en roulant entre 70 et 90 Km/h avec un éclairage ambiant inférieur au seuil 1 et sans détecter d'éclairage artificiel, la tension appliquée à la lampe est alors de 12,8 V.

« Mode code campagne, crépuscule, vitesse normale» : en roulant entre 70 et 90 Km/h avec un éclairage ambiante inférieur au seuil 2 et sans détecter d'éclairage artificiel, la tension appliquée à la lampe est alors de 12,2 V.

« Mode route, crépuscule, vitesse normale »: en roulant entre 70 et 90 Km/h avec un éclairage ambiant inférieur au seuil 2 et sans détecter d'éclairage artificiel, la tension appliquée à la lampe est alors de 12,2 V.

« Mode route, nuit, vitesse réduite »: en roulant entre 50 et 70 Km/h avec un éclairage ambiant inférieur au seuil 1 et sans détecter d'éclairage artificiel la tension appliquée à la lampe est alors de 12,8 V.

« Mode route, nuit, vitesse normale »: en roulant plus de 70 Km/h avec un éclairage ambiant inférieur au seuil 1 et sans détecter d'éclairage artificiel, la tension appliquée à la lampe est alors de 13,2 V.

« Mode code route rapide »: en roulant plus de 100 Km/h avec un éclairage ambiant inférieur au seuil 1 et sans détecter d'éclairage artificiel, la tension appliquée à la lampe est alors de 12,8 V.

«Mode code autoroute »: en roulant plus de 130 Km/h avec un éclairage ambiant inférieur au seuil 1 et sans détecter d'éclairage artificiel, la tension appliquée à la lampe est alors de 13,2 V.

« Mode DBL vitesse normale » : en roulant plus de 70 Km/h avec un éclairage ambiant inférieur au seuil 1 et sans détecter d'éclairage artificiel, la tension appliquée à la lampe est alors de 13,2 V dès que le mouvement du volant est détecté.

« Appel de phares »: Le conducteur fait un appel de phare manuellement, ce qui interrompt le calculateur d'éclairage. Cette commande manuelle peut dans une variante transiter également par le calculateur qui génère alors un signal PWM de facteur de forme adéquat pour générer 13,2V aux bornes de la lampe.

De manière également caractéristique, une tension est associée à chacun de ces modes d'éclairage. Le dispositif de commande comprend également en mémoire cette tension. Pour reprendre les deux exemples mentionnés ci-dessus, des tensions de 10,5 Volts et de 12,8 Volts sont respectivement associées aux modes « Mode ville nuit petite vitesse » et « Mode route vitesse réduite nuit ».

Le contrôleur est configuré pour recevoir des valeurs relatives aux paramètres caractérisant les modes d'éclairage. Il identifie ensuite, parmi la pluralité de modes d'éclairage, le mode d'éclairage correspondant à ces valeurs. Il détermine alors le mode d'alimentation associé à ce mode d'éclairage. Dans le cas où la source de lumière du projecteur est une lampe, chaque mode d'alimentation correspondra de préférence à une tension appliquée à la lampe. Enfin, il commande l'alimentation de la lampe du projecteur avec cette tension.

Ainsi, la tension appliquée au projecteur ne dépend pas de la fonction route ou code, mais dépend d'une pluralité de modes d'éclairage correspondant chacun à une situation de conduite.

De manière particulièrement avantageuse, le ou les paramètres traduisent une densité de trafic.

Par exemple, on prévoit qu'un véhicule équipé d'un système de navigation reçoit une information indiquant que le véhicule est localisé dans un embouteillage. Le dispositif identifie alors que le véhicule est dans un mode de conduite en embouteillage et commande alors une diminution de la puissance appliquée au projecteur.

De préférence, cette identification du mode de conduite peut être subordonnée à la vérification d'un autre paramètre tel que la vitesse du véhicule. Par exemple, le mode de conduite en embouteillage est identifié à condition que les données issues du système de navigation détectent un embouteillage et à condition que la vitesse du véhicule soit inférieure à 90 Km/h.

Ainsi, l'invention permet de réduire la tension d'alimentation ou le nombre de sources de lumière activées lorsqu'une situation d'embouteillage est détectée. La durée de vie de la lampe est donc augmentée et/ou l'émission de $CO_2$ est réduite sans diminuer significativement la sécurité. En effet, dans une situation d'embouteillage l'intensité lumineuse peut être atténuée puisque les vitesses sont réduites et que l'importante concentration de véhicule contribue à fortement éclairer la zone d'embouteillage.

La tension associée à chacun des modes d'éclairage est déterminée de manière à assurer un éclairage efficace dans la situation de conduite correspondant au mode d'éclairage et de manière à limiter la consommation du projecteur. Tout d'abord, on définit une durée de vie souhaitée pour la lampe. Cette durée de vie dépend intimement des indications données par le fabricant de lampe. On définit ensuite un profil de conduite prédéterminé. Ce profil de conduite prédéterminé est caractérisé par une durée relative d'utilisation du projecteur dans chacune des situations de conduites associées à un mode d'éclairage. Avantageusement, il correspond à une utilisation moyenne des véhicules destinés à recevoir le dispositif.

Par exemple on peut établir que, selon ce profil de conduite prédéterminé, le projecteur fonctionnera 10% du temps dans une situation de conduite correspondant à un premier mode d'éclairage, 20% du temps dans une situation de conduite correspondant à un second mode d'éclairage, 30% du temps dans une situation de conduite correspondant à un troisième mode d'éclairage et 40% du temps dans une situation de conduite correspondant à un quatrième mode d'éclairage.

En pratique, le profil de conduite prédéterminé et la durée de vie visée seront définis par le constructeur afin d'adapter les niveaux des différents tensions.

On calcule alors pour chaque mode d'éclairage une tension d'alimentation de sorte qu'avec cette tension :

- la lampe assure un éclairage satisfaisant pour ce mode d'éclairage,
- la lampe présente une durée de vie proche de la durée de vie souhaitée lorsque le projecteur est utilisé selon le profil de conduite prédéterminé.

La tension d'alimentation fournie au projecteur est plus faible que la tension délivrée par la batterie pour tous les modes d'éclairage qui ne requièrent pas une puissance lumineuse maximale. Cet abaissement de la tension opéré par le contrôleur permet de limiter la consommation de la lampe. L'émission de $CO_2$ est donc réduite. Par ailleurs, la durée de vie de la lampe est augmentée.

Dans le cas où le conducteur de véhicule ne suit pas le profil de conduite prédéterminé défini par le constructeur, le calculateur d'éclairage modifie automatiquement les tensions de sorte à atteindre tout de même la durée de vie visée avec ce profil réel de conduite du conducteur.

Des caractéristiques supplémentaires du dispositif vont maintenant être détaillées. Le dispositif comprend des moyens d'alimentation et le contrôleur d'éclairage. Ce dernier peut être situé à l'extérieur du projecteur et peut être intégré le cas échéant dans un autre boîtier électronique tel que le « body controller », pour piloter la puissance des lampes du véhicule. Il comprend un microcontrôleur et un hacheur de tension piloté par le microcontrôleur.

Dans ce cas, la lampe est alimentée directement par le contrôleur d'éclairage du véhicule, avec un signal modulé en largeur d'impulsions également appelé signal modulé en durée et souvent désigné par son acronyme anglo-saxon PWM (pour Pulse Width Modulation).

Le contrôleur d'éclairage 12 comprend une carte électronique de régulation destinée à être implantée dans le body controller.

Il reçoit les valeurs relatives aux paramètres provenant de plusieurs capteurs du véhicule : capteur de vitesse du véhicule, capteur d'éclairage ambiant, capteur de vitesse d'angle au volant, système de navigation, capteur d'accélération, capteur d'enfoncement d'une pédale ou d'une commande etc. Il en déduit le mode d'éclairage correspondant à la situation de conduite et commande l'application de la tension associée à ce mode.

De manière particulièrement avantageuse, on le véhicule est équipé d'une caméra faisant office de capteur pour identifier le mode de conduite et déterminer la tension à appliquer au projecteur. Plus précisément, la caméra peut être configurée pour détecter :

- le nombre de véhicules à proximité du véhicule équipé de la caméra. Une situation d'embouteillage peut ainsi être détectée. La tension alimentant le projecteur peut alors être réduite.
- la distance entre le véhicule équipé de la caméra et au moins un véhicule suivi. Plus le véhicule suivi est proche, plus la tension alimentant le projecteur est diminuée.
- la vitesse relative et/ou l'accélération par rapport à véhicule suivi, un véhicule suiveur ou un véhicule croisé.
- la vitesse absolue du véhicule équipé de la caméra.
- la couleur d'une ligne de marquage au sol. Si une ligne de marquage annonce des travaux, alors la tension alimentant le projecteur est temporairement augmentée de sorte à renforcer l'éclairage dans les zones de travaux qui sont souvent particulièrement accidentogènes.

- la signification d'un panneau de signalisation. Si un panneau signalant un croisement ou un rond-point est détecté, alors le dispositif commande un abaissement de la tension alimentant le projecteur. Le véhicule équipé de la caméra arrive alors au croisement ou au rond-point sans éblouir les autres véhicules. De manière alternative ou cumulée à l'utilisation d'une caméra, on peut également prévoir que le dispositif identifie l'arrivée du véhicule à un croisement ou à un rond-point grâce à un système de navigation.
- une luminosité ambiante et/ou la présence de lampadaires et/ou la présence d'un environnement urbain et/ou la présence d'un éclairage public. La caméra permet ainsi de se passer d'un capteur de lumière.
- la présence d'un feu rouge.
- la présence de phénomènes perturbateurs de visibilité tels que du brouillard, de la pluie, de la neige ou de la fumée. Avantageusement, la caméra détermine également la densité de ce phénomène. Ainsi, si un brouillard important est détecté, le dispositif pilote une augmentation de l'intensité lumineuse générée par le projecteur.
- un obstacle. En cas de détection d'obstacle sur la chaussée par exemple, l'invention peut commander une augmentation de la tension du projecteur de sorte à améliorer temporairement la visibilité de l'obstacle.
- l'allumage de feu de stop d'un véhicule suivi. L'allumage de feux de stop par la voiture suivi peut annoncer un obstacle ou un danger situé en avant du véhicule équipé de l'invention. La tension du projeteur est alors augmentée de sorte à améliorer la visibilité afin de déterminer la cause du freinage du véhicule suivi.

De préférence, la caméra est située à l'avant du véhicule. Selon la nature de la détection à effectuer, la caméra peut être très basique ou être équipée de moyens de reconnaissance de couleur et/ou de moyens de reconnaissance d'obstacle, de panneaux de signalisation etc.

L'utilisation d'une caméra est particulièrement avantageuse puisqu'elle implique un coût limité. Ce coût est encore réduit dans le cas où la caméra assure des fonctions indépendantes de celles requises dans le cadre de la présente invention.

Avantageusement, une même caméra peut être configurée pour détecter plusieurs des modes de conduites décrits ci-dessus. De manière alternative ou cumulée, le ou les paramètres détectés avec la caméra sont combinés avec d'autres paramètres tels que la vitesse de rotation des roues, des données de navigation etc. Cela permet, lors de la création du système, de définir avec précision un grand nombre de modes de conduite. Lors de l'utilisation de l'invention, cela permet également d'augmenter le coefficient de confiance associé au mode de conduite identifié en phase de roulage.

Dans l'exemple illustré en figure 4, la tension du projecteur 41 est commandée par une unité de pilotage 42 qui recueille les données issues de plusieurs capteurs 43, 44, 45. Sur cet exemple ces données proviennent d'un capteur d'éclairement 43, d'un capteur de vitesse 44 et d'un radar 45 mesurant la présence d'un véhicule suivi à proximité du véhicule équipé ou mesure la distance entre la véhicule équipé et un véhicule suivi.

L'unité de pilotage 42 combine les données issues de ces capteurs pour déterminer le mode de conduite dans lequel se trouve le véhicule de sorte à déterminer la tension d'alimentation à appliquer au projecteur 41.

Par exemple :

- si le capteur d'éclairement 43 détecte un éclairage urbain et que le capteur de vitesse 44 identifie que la vitesse du véhicule n'est pas nulle, alors l'unité de pilotage 42 applique une tension de 12 Volts au projecteur 41.
- si le capteur d'éclairement 43 détecte un éclairage urbain et que le capteur de vitesse 44 identifie que la vitesse du véhicule est nulle, alors l'unité de pilotage 42 applique une tension de 0 Volts au projecteur 41.
- si le capteur d'éclairement 43 ne détecte pas d'éclairage extérieur et que le capteur de vitesse 44 identifie que la vitesse du véhicule est nulle, alors l'unité de pilotage 42 applique une tension de 12 Volts au projecteur 41.
- si le radar 45 détecte un véhicule suivi à proximité du véhicule équipé, alors l'unité de pilotage 42 applique une tension de 12 Volts au projecteur 41.

De manière avantageuse, le capteur de vitesse 44 mesure la vitesse de rotation des roues.

De manière avantageuse, le radar 45 est un radar de régulateur de vitesse. Ce radar 45 a donc une fonction additionnelle à celle du pilotage de l'éclairage. L'implémentation de l'invention sur un véhicule ne requiert donc pas un radar additionnel, ce qui permet de limiter les coûts.

Dans l'exemple illustré en figure 5, l'unité de pilotage 42 commande la tension du projecteur 51 assurant une fonction de feux de croisement également désignée feux de code ou désignée par son vocable anglais low beam. En plus de recueillir des données issues d'un capteur d'éclairement 43 et d'un capteur de vitesse 44, l'unité de pilotage 42 recueille des données issues d'un second projecteur 52 qui assure une fonction de feux de route également désignée phare ou désignée par son vocable anglais high beam.

L'unité de pilotage 42 est configurée de sorte à identifier si les feux de croisement sont activés en même temps que les feux de route. Si tel est le cas, l'unité de pilotage 42 abaisse la tension appliquée au projecteur 51 de feux de croisement à 12 Volts. Ainsi, le lumière proche du véhicule est réduite ce qui est très peu préjudiciable pour la sécurité et le confort de la conduite puisque les feux de route sont activés. La consommation d'énergie est alors réduite et la durée de vie de la source de lumière du projecteur de feux de croisement 51 est allongée.

Cet exemple peut bien entendu être combiné au précédent exemple utilisant un radar 45 pour le déterminer le mode de conduite.

De manière préférée, le dispositif est agencé de sorte à détecter si une forte densité de véhicules dans le champ de la caméra est située sur la gauche ou sur la droite du véhicule.

Si cette forte densité de véhicules est située sur la droite, alors le dispositif en déduit que le véhicule équipé est situé dans l'embouteillage. Le dispositif identifie alors un mode d'éclairage correspondant à une conduite en embouteillage. La tension d'alimentation du projecteur est par conséquent réduite.

Si cette forte densité de véhicules est située sur la gauche, alors le dispositif en déduit que ces véhicules vont dans un sens inverse de celui du véhicule équipé. Ce dernier n'est alors pas situé dans l'embouteillage et le mode d'éclairage identifié ne correspond pas à une conduite en embouteillage.

De préférence, d'autres paramètres sont analysés pour déterminer si le véhicule équipé est ou non plongé dans l'embouteillage. Ces paramètres peuvent par exemple chercher à identifier, sur la base de déplacements ou de vitesses relatives, si les véhicules vont dans le même sens que le véhicule équipé.

Cette détection d'embouteillage est valable pour les pays pratiquant la conduite à droite. Afin de configurer un véhicule équipé de la présente invention dans les pays pratiquant la conduite à gauche, on prévoit également une commande pour inverser la détection de la densité de trafic : si une forte densité de véhicules est située sur la gauche, alors le dispositif en déduit que le véhicule équipé est situé dans l'embouteillage. Le dispositif identifie alors un mode d'éclairage correspondant à une conduite en embouteillage. La tension d'alimentation du projecteur est par conséquent réduite.

Dans un mode de réalisation particulièrement avantageux, le projecteur comprend une pluralité de sources de lumière. Chaque source de lumière peut être une lampe à incandescence ou, de préférence, une diode électroluminescente ou un module comportant plusieurs diodes électroluminescentes ou plusieurs lampes.

Le dispositif selon l'invention est configuré pour contrôler, en fonction du mode d'éclairage identifié, l'activation et la désactivation d'au moins une source de lumière prises parmi la pluralité de sources de lumière et indépendamment de l'activation et de la désactivation des autres sources de lumière.

Ainsi, en fonction de la situation de conduite on adapte l'éclairage généré par le projecteur en modulant la répartition des sources de lumières activées et des sources de lumière désactivées. La consommation énergétique et l'émission de $CO_2$ sont donc réduites.

Dans un mode particulier de réalisation, au moins un mode d'alimentation du projecteur définit l'activation ou la désactivation de chacune des sources indépendamment des autres sources de lumière. Afin de limiter la complexité du dispositif, on prévoit que plusieurs sources de lumières appartiennent à un même module et sont activables et désactivables de manière commune. Cela est notamment avantageux lorsque le projecteur comprend un nombre élevé de diodes électroluminescentes. Plusieurs diodes électroluminescentes sont alors regroupées pour former un même module, le dispositif commandant l'activation ou la désactivation simultanée de l'ensemble des diodes électroluminescentes du module.

De manière avantageuse, le dispositif et la répartition des sources de lumière sont configurés de manière que, pour au moins une pluralité de modes d'éclairage, l'intensité lumineuse générée par le projecteur varie et la forme du motif lumineux généré par le projecteur demeure sensiblement constante d'un mode d'éclairage à l'autre.

Ainsi on prévoit que dans un mode d'alimentation les sources désactivées et les sources activées sont réparties de sorte à ne pas faire apparaître de variation du motif. La désactivation de certaines sources de lumière n'engendre donc pas de zones noires ou peu éclairées. La perception qu'a le conducteur du motif généré demeure par conséquent constante quel que soit le mode de conduite. En revanche, l'intensité du faisceau varie d'un mode de conduite à l'autre. On peut ainsi réduire significativement la puissance consommée par le projecteur sans perturber fortement le conducteur. Avantageusement, la perception du motif demeure également constante pour les conducteurs des autres véhicules ou pour les piétons.

Ce mode de réalisation avec adaptation de l'éclairage par modulation du nombre et/ou de la répartition des sources de lumière s'applique aussi bien aux sources de lumière constituées de lampes que de diodes électroluminescentes ou de modules formés de diodes électroluminescentes.

Les figures 6 et 7 illustrent cette adaptation de l'éclairage par modulation de l'activation ou de la désactivation des sources d'éclairage.

La figure 6 représente les motifs 61, 62, 63, 64 de quatre faisceaux élémentaires générés chacun par une source de lumière S1, S2, S3, S4. Chaque source de lumière S1, S2, S3, S4 est une lampe ou une diode électroluminescente ou un module formé de une ou plusieurs diodes électroluminescentes ou un module formé de une ou plusieurs lampes.

Les axes 68 et 69 représentent respectivement la ligne d'horizon et la verticale. Le centre défini par ces axes 68, 69 est situé à l'avant du véhicule équipé de la présente invention. Les lignes à l'intérieur des motifs sont des lignes d'iso intensité lumineuse et reflètent ainsi les zones de même intensité lumineuse.

La source S1 génère un faisceau élémentaire dont le motif porte la référence 61 et dont l'intensité lumineuse est quasiment nul au dessus de la ligne d'horizon. Ce type de faisceau est habituellement désigné faisceau à coupure horizontal. Il évite d'éblouir les conducteurs venant en sens inverse. Ce faisceau permet de bien éclairer le centre de la route.

Comme cela apparaît clairement sur la figure 6, la source S2 génère un faisceau élémentaire dont le motif 62 est sensiblement identique au motif 61 du faisceau généré par la source S1.

La source S3 génère un faisceau élémentaire dont le motif 63 présente une coupure oblique selon l'axe 67. Ce faisceau est concentré autour de l'axe 68 formé par l'intersection de la ligne d'horizon et de la verticale 69. Il évite d'éblouir les conducteurs venant en sens inverse sur la gauche et éclaire une zone 67 situé au dessus de la ligne d'horizon et sur la droite.

Comme cela apparaît clairement sur la figure 6, la source S4 génère un faisceau élémentaire dont le motif 64 est sensiblement identique au motif 63 du faisceau généré par la source S3.

La figure 7 représente le motif 71 d'un faisceau complexe obtenu en activant les sources S1, S2, S3 et S4. Le motif 71 de ce faisceau complexe est formé par la superposition des motifs 61, 62, 63, 64 de chacun des faisceaux élémentaires. Il cumule ainsi les caractéristiques de chacun des motifs 61, 62, 63, 64 de ces faisceaux élémentaires. Notamment, on retrouve la zone 67 éclairant sous la ligne d'horizon à gauche et générée par les faisceaux élémentaires des sources S1 et S2. On retrouve également la zone 65 éclairant au dessus de la ligne d'horizon et à droite et générée par les faisceaux élémentaires des sources S3 et S4.

La figure 7 représente un faisceau complexe généré par les sources S2 et S4 uniquement. Le motif 72 de ce faisceau complexe correspond à la superposition des motifs 62, 64 uniquement.

Le motif 72 est très sensiblement identique au motif 71. Notamment, on retrouve la zone 67 éclairant sous la ligne d'horizon à gauche et la zone 65 éclairant au dessus de la ligne d'horizon et à droite.

En désactivant les sources S1 et S3, on ne modifie par conséquent pas significativement le motif généré. Il n'y a notamment pas de zones qui deviennent non éclairées du fait de la désactivation des sources 1 et 3. Le conducteur du véhicule équipé n'est donc pas perturbé. Les autres conducteurs et les piétons ne sont également pas perturbés. Pour obtenir le faisceau du motif 72, deux fois moins de sources de lumière sont nécessaires que pour obtenir le faisceau du motif 71. La consommation énergétique et l'émission de $CO2$ sont donc considérablement réduites. Cette réduction de la consommation s'accompagne d'une baisse de l'intensité lumineuse. Cette baisse se traduit par une densité moins forte des lignes d'iso intensité de lumière sur le motif 72 que sur le motif 71.

Cette baisse de l'intensité lumineuse n'est cependant pas préjudiciable dans de nombreuses situations de conduite. Comme expliqué en détail précédemment, le dispositif objet de la présente invention identifie ces situations de conduite et adapte en conséquence le mode d'alimentation du projecteur pour conserver un éclairage approprié tout en réduisant la consommation énergétique.

Dans une variante de réalisation, on notera qu'en fonction du mode d'éclairage identifié, on peut à la fois adapter la tension et/ou l'intensité appliquée à la source et à la fois moduler la répartition et/ou le nombre de sources activées.

Un exemple non limitatif va maintenant être détaillé pour faciliter la compréhension de l'invention.

Pour montrer comment augmenter la durée de vie d'une lampe en fonction de la tension de cette même lampe, il faut se rappeler que la durée de vie d'une lampe varie avec la puissance moins 13 de la tension à ces bornes.

Considérons un projecteur bi-halogène lui-même équipé d'une lampe H9 et utilisé 10% du temps sur route rapide (vitesse supérieure à 100 km/h), 10% du temps en mode virage, 10% du temps en mode route (longue portée). Ces trois situations de conduite correspondent à des modes d'éclairage qui représentent 30% de la durée de vie de la lampe. Ces situations de conduite nécessitent un éclairage intense. La lampe sera donc alimentée à la tension maximale pour ces modes d'éclairage. Considérons une tension fournie par la batterie de 13,2 Volts. La durée de vie d'une telle lampe alimentée avec cette tension est environ de 250 heures. La durée de vie consommée par l'ensemble de ces trois situations de conduites est donc de 30% * 250h= 75 heures.

En prenant en compte un B3 de la lampe H9 de 250heures, il reste donc 250h-75h= 175 heures durant lesquelles on peut alimenter la lampe H9 à des tensions inférieures à la tension en sortie batterie, de manière à réduire la consommation tout en procurant des performances d'éclairage moins puissantes mais néanmoins acceptables pour les autres situations de conduite. On augmente ainsi de façon significative la durée de vie.

Pour arriver à une durée de vie d'environ 900 heures, c'est à dire équivalente à celle d'une lampe de type H7LL (lampe H7 à durée de vie augmentée, Long Life), on réduit les tensions d'alimentation en fonction des domaines de vitesses par exemple :

- Vitesse > 30km/h (65% du temps restant non compris dans les 30% d'usage à 13,2V) performances équivalentes à celles d'une H7LL : V =11,8V (tension pour laquelle la durée de vie des lampes est multipliée par 4)
- Vitesse <30km/h ou Vitesse =0km/h (35% du temps restant non compris dans les 30% d'usage à 13,2V) : performances réduites mais réglementaires : V=10,5V, (tension pour laquelle la durée de vie des lampes est multipliée par 19)

On arrive donc, pour ce profil de conduite, à une durée de vie de total de la lampe de :

$$\text{Ltime} = 75\text{h}_{13,2\text{Volts}} + 175 \times 0,65 \times 4 + 175 \times 0,35 \times 19 = 1693 \text{ heures}$$

Dans ce cas, sur la base d'un historique des tensions et durées appliquées des modes d'éclairage, le calculateur peut évaluer par anticipation cette durée de vie excessive, et par exemple remonter la tension des projecteurs de 10,5V à 11V pour arriver à 612h de durée de vie en ville, soit au total 1142h de durée de vie estimée pour la lampe.

Ainsi, le calculateur, en fonction de cet historique, ajuster la tension de sorte que, par exemple, si la durée de vie est supérieure au seuil de durée de vie acceptable, on peut augmenter la tension appliquée. Si elle est inférieure, on peut diminuer la tension pour allonger la durée de vie.

L'invention permet donc de multiplier par 6,68 la durée de vie de la lampe tout en offrant des conditions d'éclairage adaptées aux situations de conduite.

Néanmoins, on peut choisir de remonter la tension des projecteurs de 10,5V à 11V pour arriver à 612h de durée de vie en ville soit au total 1522h. L'éclairage à faible vitesse sera donc supérieur à l'éclairage réglementaire et la durée de vie des lampes sera tout de même multipliée par 6,1 par rapport à une utilisation en puissance maximale permanente.

Si, comme expliqué précédemment, le conducteur ne suit pas le profil de conduite prédéterminé défini par le constructeur, le calculateur d'éclairage modifie automatiquement les tensions de sorte à atteindre tout de même la durée de vie visée avec ce profil réel de conduite.

Par exemple, si le calculateur détecte que la durée relative d'utilisation à pleine puissance est de 60% (fonction route et grande vitesse et/ou conduite en virage par exemple), alors le contrôleur ajuste les tensions de chacun des modes de conduite de sorte à dépasser les 1000 heures de durée de vie avec le profil réel du conducteur.

Cet exemple est aisément transposable et permet de mettre en évidence les avantages de l'invention : maintenir une durée de vie acceptable (typiquement de l'ordre de 1000h), tout en offrant de hautes performances dans les conditions qui le requièrent (fonction d'éclairage avancées, fonction d'orientation de l'éclairage dans les virage généralement désignée par son acronyme DBL - anglais Dynamic Bending Light), des performances "normales" dans les conditions de roulage standard et des performances réglementaires dans les conditions qui ne requièrent rien d'autre (code en ville, code à l'arrêt, etc.)

Une réglementation routière définit une grille de point sur un écran vertical situé à une distance donnée du projecteur. Pour chacun de ces points, la réglementation va définir les intensités lumineuses acceptables. Par exemple selon la réglementation européenne, pour des projecteurs homologués en "code", la réglementation autorise 12lx. Cependant, il est courant d'avoir un éclairement de 25 lx à 25m dans le point 75R.. Ceci autorise à abaisser la tension aux bornes des lampes à une tension inférieure à 12V. Dans le cas d'un éclairement du point 75R piloté à 15lx obtenu par sous-voltage de la lampe, et dans la mesure où les autres points définis dans la norme restent au-dessus des limites réglementaires, l'application de la formule exprimant la performance lumineuse de la lampe en puissance -3,25 de la tension, permet d'envisager une tension appliquée de ~10,25V :

$$V = 12 \times e^{\frac{1}{3,25} \times Ln\frac{15}{25}}$$

$$V = 10,25V$$

Dans des conditions de roulage à vitesse réduite (ville, bouchon, feux de trafic,..) on peut donc envisager de réduire la puissance de $(10,37/14)^{*2}$ soit de 35W par lampe, c'est-à-dire de 70W par véhicule. Cette réduction de puissance conduit à une réduction considérable des émissions de $CO_2$ (environ 3,5gr $CO_2$ /km dans ce cas).

Or, il est admis que le cycle de recombinaison de l'halogène dans une lampe n'est pas affecté tant que la tension n'est pas inférieure à 10V. Cette application est donc rendue parfaitement possible en pratique.

Dans la mesure où un véhicule roule plus des deux tiers de son temps en ville, cette baisse de puissance permet d'augmenter très sensiblement sa durée de vie. Dans cas, pour une utilisation d'une lampe bi-Halogène de type H9, le gain de durée de vie ainsi obtenu est mis à profit pour augmenter les performances d'éclairage dans les virages (fonction généralement désignée par son acronyme anglais Dynamic Bending Light), en mode route, voire en mode autoroute pour augmenter la performance de 30%. Dans cette configuration, le relevage du projecteur à l'aide des moteurs de corrections statiques ou dynamiques est prévu. A cet effet les moteurs peuvent être des moteurs à courant continu ou pas à pas.

**Revendications**

1. Procédé de commande de l'alimentation d'un projecteur (10) de véhicule apte à fournir un éclairage en fonction route et/ou en fonction code, comprenant les étapes suivantes pour au moins l'une parmi les fonctions code et route :

   - on détermine au moins un paramètre de conduite pertinent pour l'éclairage du véhicule,
   - on définit une pluralité de modes d'éclairage **caractérisés par** la valeur de ce au moins un paramètre,
   - on attribue à chaque mode d'éclairage un mode d'alimentation du projecteur,
   - on enregistre dans une mémoire le mode d'alimentation associé à chacun des modes d'éclairage, chaque mode d'alimentation du projecteur correspondant à une tension donnée appliquée au projecteur (10) et/ou correspondant à une intensité donnée appliquée au projecteur (10), et le projecteur comprenant une pluralité de sources de lumière (S1, S2, S3, S4), **caractérisé en ce que** chaque mode d'alimentation du projecteur définit l'activation ou la désactivation d'au moins une source de lumière (S1, S2, S3, S4) indépendamment des autres sources de lumière (S1, S2, S3, S4), **en ce que** l'éclairage fourni par le projecteur génère un motif lumineux (61, 62, 63, 64, 71, 72) et une intensité lumineuse et **en ce que** les modes d'alimentation sont définis de manière à ce que le motif (71, 72) soit sensiblement identique pour au moins une pluralité de modes d'alimentation et de manière à ce que pour cette pluralité de modes d'alimentation l'intensité lumineuse varie d'un mode d'alimentation à l'autre.

2. Procédé selon la revendication précédente, dans lequel les sources de lumières (S1, S2, S3, S4) sont des lampes à incandescence, des diodes électroluminescentes ou des modules comprenant une pluralité de diodes électroluminescentes ou une pluralité de lampes.

3. Procédé selon l'une quelconque des revendications précédentes, dans lequel ledit au moins un paramètre comprend au moins un paramètre interne au véhicule choisi parmi les paramètres suivants: une vitesse du véhicule, des données de navigation, un régime du moteur du véhicule, la vitesse de rotation d'un volant du véhicule, l'activation des essuie-glaces et des feux anti-brouillard, une valeur d'accélération, une vitesse ou un angle d'actionnement d'une pédale de frein ou d'accélération, l'enclenchement d'une commande du conducteur.

4. Procédé selon l'une quelconque des revendications précédentes, dans lequel ledit au moins un paramètre comprend un paramètre qui traduit l'état externe au véhicule choisi parmi les paramètres suivants: luminosité ambiante, la luminosité d'un éclairage public, la luminosité d'un éclairage naturel, le degrés de pollution, le nombre de véhicules dans un périmètre déterminé, la distance par rapport à un véhicule suivi, la vitesse relative et/ou l'accélération par rapport à un véhicule suivi, un véhicule suiveur ou un véhicule croisé, la couleur d'une ligne de marquage au sol, la signification d'un panneau de signalisation, la présence d'un obstacle, l'arrivée à un croisement ou à un rond-point, la présence d'un environnement urbain, la présence d'un éclairage public, la présence d'un feu rouge, la présence de brouillard, de pluie, de neige ou de fumée, la détection d'un obstacle.

5. Procédé selon l'une quelconque des revendications précédentes, dans lequel ledit au moins un paramètre comprend un paramètre qui traduit une densité de trafic, la densité de trafic étant déterminée par des données de navigation reflétant la densité de trafic ou par la vitesse du véhicule combinée à au moins un sous paramètre pris parmi : la distance par rapport à un véhicule suivi, le nombre de véhicules dans un périmètre déterminé, des données de navigation reflétant la densité de trafic.

6. Procédé selon l'une quelconque des revendications précédentes dans lequel lors de l'utilisation du véhicule:

   - on reçoit des valeurs relatives audit paramètre,
   - on identifie, parmi la pluralité de modes d'éclairage, le mode d'éclairage correspondant à ces valeurs,
   - on détermine un mode d'alimentation du projecteur en fonction dudit mode d'éclairage.

**7.** Procédé selon l'une quelconque des revendications précédentes dans lequel on définit les modes d'alimentation en effectuant les étapes suivantes :

- on définit une durée de vie souhaitée pour le projecteur et/ou une consommation énergétique maximale souhaitée du projecteur pour une durée donnée d'utilisation du projecteur,
- on définit un profil de conduite prédéterminé **caractérisé par** une durée relative d'utilisation du projecteur dans chacun des modes d'éclairage,
- on calcule pour chaque mode d'éclairage un mode d'alimentation de manière à ce qu'avec ce mode d'alimentation le projecteur assure un éclairage satisfaisant pour ce mode d'éclairage tout en présentant une durée de vie proche de la durée de vie souhaitée et/ou tout en induisant une consommation énergétique proche de la consommation énergétique maximale souhaitée pour une utilisation correspondant au profil de conduite prédéterminé.

**8.** Dispositif de commande de l'alimentation d'un projecteur (10) de véhicule apte à fournir un éclairage en fonction route et en fonction code, comprenant, pour au moins l'une parmi les fonctions code et route, un contrôleur pour :

- recevoir des valeurs relatives à au moins un paramètre pertinent pour l'éclairage du véhicule,
- identifier, parmi une pluralité de modes d'éclairage, un mode d'éclairage correspondant à ces valeurs,
- déterminer un mode d'alimentation du projecteur en fonction du mode d'éclairage identifié **caractérisé en ce que** ledit dispositif est configuré pour mettre en oeuvre le procédé selon l'une des revendications 1 à 7.

**9.** Dispositif selon la revendication précédente comprenant au moins l'un parmi les moyens suivants configurés pour recevoir le au moins un paramètre pertinent pour l'éclairage du véhicule :

- des moyens de détection du nombre de véhicules à proximité dudit véhicule,
- des moyens de détection de la distance entre ledit véhicule et au moins un véhicule suivi,
- des moyens de détection de la vitesse absolue dudit véhicule,
- des moyens de détection de la vitesse relative et/ou de l'accélération dudit véhicule par rapport à véhicule suivi, un véhicule suiveur ou un véhicule croisé,
- des moyens de détection de la couleur d'une ligne de marquage au sol,
- des moyens de détection de la signification d'un panneau de signalisation,
- des moyens de détection et de mesure de la luminosité ambiante,
- des moyens de détection de la présence d'un environnement urbain,
- des moyens de détection de la présence de lampadaires,
- des moyens de détection d'un obstacle,
- des moyens de détection de l'allumage de feux de stop d'un véhicule suivi
- un radar ou un lidar configuré pour recevoir l'un des paramètres suivants : le nombre de véhicules à proximité dudit véhicule, la détection d'un véhicule suivi, la distance entre ledit véhicule et un véhicule suivi, la vitesse relative et/ou l'accélération par rapport à véhicule suivi, un véhicule suiveur ou un véhicule croisé, la présence d'un obstacle.

**10.** Projecteur d'éclairage (10) pour véhicule comprenant un dispositif selon l'une quelconque des revendications 8 à 9.

**11.** Projecteur selon la revendication précédente comprenant une pluralité de sources de lumière (S1, S2, S3, S4) et dans lequel le dispositif est agencé de manière à commander, en fonction du mode d'éclairage identifié, l'activation et la désactivation d'au moins une source de lumière prises parmi la pluralité de sources de lumière (S1, S2, S3, S4) et indépendamment de l'activation et de la désactivation des autres sources de lumière (S1, S2, S3, S4).

## Patentansprüche

**1.** Verfahren zur Steuerung der Stromversorgung eines Scheinwerfers (10) eines Fahrzeugs, das geeignet ist, eine Beleuchtung in der Fernlichtfunktion und/oder in der Abblendfunktion zu liefern, umfassend die folgenden Schritte für mindestens eine der Abblend- und Fernlichtfunktionen:

- Bestimmung mindestens eines stichhaltigen Fahrparameters für die Beleuchtung des Fahrzeugs,
- Definition einer Vielzahl von Beleuchtungsmodi, die durch den Wert dieses mindestens einen Parameters gekennzeichnet sind,

- Zuteilung eines Stromversorgungsmodus des Scheinwerfers zu jedem Beleuchtungsmodus,
- Aufzeichnung des jedem der Beleuchtungsmodi zugeteilten Stromversorgungsmodus in einem Speicher,

wobei jeder Stromversorgungsmodus des Scheinwerfers einer gegebenen Spannung entspricht, die an den Scheinwerfer (10) angelegt wird, und/oder einer gegebenen Stromstärke entspricht, die an den Scheinwerfer (10) angelegt wird, und wobei der Scheinwerfer eine Vielzahl von Lichtquellen (S1, S2, S3, S4) umfasst, **dadurch gekennzeichnet, dass** jeder Stromversorgungsmodus des Scheinwerfers die Aktivierung oder die Deaktivierung mindestens einer Lichtquelle (S1, S2, S3, S4) unabhängig von den anderen Lichtquellen (S1, S2, S3, S4) definiert, dass die Beleuchtung, die von dem Scheinwerfer geliefert wird, ein Lichtmuster (61, 62, 63, 64, 71, 72) und eine Lichtstärke erzeugt, und dass die Stromversorgungsmodi derart definiert sind, dass das Muster (71, 72) im Wesentlichen für mindestens eine Vielzahl von Stromversorgungsmodi identisch ist, und derart, dass für diese Vielzahl von Stromversorgungsmodi die Lichtstärke von einem Stromversorgungsmodus zum anderen variiert.

**2.** Verfahren nach dem vorhergehenden Anspruch, bei dem die Lichtquellen (S1, S2, S3, S4) Glühlampen, Leuchtdioden oder Module, umfassend eine Vielzahl von Leuchtdioden oder eine Vielzahl von Lampen, sind.

**3.** Verfahren nach einem der vorhergehenden Ansprüche, bei dem der mindestens eine Parameter mindestens einen dem Fahrzeug internen Parameter umfasst, der unter den folgenden Parametern ausgewählt ist: Geschwindigkeit des Fahrzeugs, Navigationsdaten, Drehzahl des Motors des Fahrzeugs, Rotationsgeschwindigkeit eines Lenkrads des Fahrzeugs, Aktivierung der Scheibenwischer und der Nebelscheinwerfer, Beschleunigungswert, Betätigungsgeschwindigkeit oder -winkel eines Brems- oder Gaspedals, Einschalten einer Steuerung des Fahrers.

**4.** Verfahren nach einem der vorhergehenden Ansprüche, bei dem der mindestens eine Parameter einen Parameter umfasst, der den externen Zustand zum Fahrzeug wiedergibt und unter den folgenden Parametern ausgewählt ist: Umgebungshelligkeit, Helligkeit einer öffentlichen Beleuchtung, Helligkeit einer natürlichen Beleuchtung, Verschmutzungsgrade, Anzahl von Fahrzeugen in einem bestimmten Umkreis, Abstand zu einem vorderen Fahrzeug, relative Geschwindigkeit und/oder Beschleunigung in Bezug zum vorderen Fahrzeug, nachkommendes oder kreuzendes Fahrzeug, Farbe einer Markierungslinie am Boden, Bedeutung einer Anzeigetafel, Vorhandensein eines Hindernisses, Ankunft an einer Kreuzung oder einem Kreisverkehr, Vorhandensein einer urbanen Umgebung, Vorhandensein einer öffentlichen Beleuchtung, Vorhandensein einer Ampel, Vorhandensein von Nebel, Regen, Schnee oder Rauch, Erfassung eines Hindernisses.

**5.** Verfahren nach einem der vorhergehenden Ansprüche, bei dem der mindestens eine Parameter einen Parameter umfasst, der eine Verkehrsdichte wiedergibt, wobei die Verkehrsdichte von Navigationsdaten, die die Verkehrsdichte wiedergeben, oder von der Geschwindigkeit des Fahrzeugs in Kombination mit mindestens einem Unterparameter bestimmt wird, welcher ausgewählt ist unter: Abstand zum vorderen Fahrzeug, Anzahl von Fahrzeugen in einem bestimmten Umkreis, Navigationsdaten, die die Verkehrsdichte wiedergeben.

**6.** Verfahren nach einem der vorhergehenden Ansprüche, bei dem bei der Verwendung des Fahrzeugs:

- Werte zu dem Parameter erhalten werden,
- unter der Vielzahl von Beleuchtungsmodi der diesen Werten entsprechende Beleuchtungsmodus identifiziert wird,
- ein Stromversorgungsmodus des Scheinwerfers in Abhängigkeit von dem Beleuchtungsmodus bestimmt wird.

**7.** Verfahren nach einem der vorhergehenden Ansprüche, bei dem die Stromversorgungsmodi definiert werden, wobei die folgenden Schritte ausgeführt werden:

- Definition einer gewünschten Lebensdauer für den Scheinwerfer und/oder eines gewünschten maximalen Energieverbrauchs des Scheinwerfers für eine gegebene Verwendungsdauer des Scheinwerfers,
- Definition eines vorbestimmten Fahrprofils, **gekennzeichnet, durch** eine relative Verwendungsdauer des Scheinwerfers in jedem der Beleuchtungsmodi,
- für jeden Beleuchtungsmodus Berechnung eines Stromversorgungsmodus, so dass mit diesem Stromversorgungsmodus der Scheinwerfer eine zufriedenstellende Beleuchtung für diesen Beleuchtungsmodus gewährleistet, wobei er eine Lebensdauer nahe der gewünschten Lebensdauer aufweist, und/oder wobei er einen Energieverbrauch nahe dem gewünschten maximalen Energieverbrauch für eine Verwendung entsprechend dem vorbestimmten Fahrprofil induziert.

**8.** Vorrichtung zur Steuerung der Stromversorgung eines Scheinwerfers (10) eines Fahrzeugs, der geeignet ist, eine Beleuchtung in der Fernlichtfunktion und in der Abblendfunktion zu liefern, umfassend für mindestens eine der Abblend- und Fernlichtfunktionen einen Kontroller, um:

- Werte zu mindestens einem stichhaltigen Parameter für die Beleuchtung des Fahrzeugs zu erhalten,
- unter einer Vielzahl von Beleuchtungsmodi einen diesen Werten entsprechenden Beleuchtungsmodus zu identifizieren,
- einen Stromversorgungsmodus des Scheinwerfers in Abhängigkeit von dem identifizierten Beleuchtungsmodus zu bestimmen,

**dadurch gekennzeichnet, dass** die Vorrichtung ausgeführt ist, um das Verfahren nach einem der Ansprüche 1 bis 7 einzusetzen.

**9.** Vorrichtung nach dem vorhergehenden Anspruch, umfassend mindestens eines unter den folgenden Mitteln, die ausgeführt sind, um den mindestens einen stichhaltigen Parameter für die Beleuchtung des Fahrzeugs zu erhalten:

- Mittel zur Erfassung der Anzahl von Fahrzeugen in der Nähe des Fahrzeugs,
- Mittel zur Erfassung des Abstands zwischen dem Fahrzeug und mindestens einem vorderen Fahrzeug,
- Mittel zur Erfassung der absoluten Geschwindigkeit des Fahrzeugs,
- Mittel zur Erfassung der relativen Geschwindigkeit und/oder der Beschleunigung des Fahrzeugs in Bezug zu einem vorderen Fahrzeug, einem nachkommenden Fahrzeug oder einem kreuzenden Fahrzeug,
- Mittel zur Erfassung der Farbe einer Markierungslinie am Boden,
- Mittel zur Erfassung der Anzeige einer Anzeigetafel,
- Mittel zur Erfassung und Messung der Umgebungshelligkeit,
- Mittel zur Erfassung des Vorhandenseins einer urbanen Umgebung,
- Mittel zur Erfassung des Vorhandenseins von Straßenlaternen,
- Mittel zur Erfassung eines Hindernisses,
- Mittel zur Erfassung der des Leuchtens der Bremslichter eines vorderen Fahrzeugs,
- ein Radar oder Lidar, das ausgeführt ist, um einen der folgenden Parameter zu erhalten: Anzahl von Fahrzeugen in der Nähe des Fahrzeugs, Erfassung eines vorderen Fahrzeugs, Abstand zwischen dem Fahrzeug und einem vorderen Fahrzeug, relative Geschwindigkeit und/oder Beschleunigung in Bezug zum vorderen Fahrzeug, nachkommendes Fahrzeug oder kreuzendes Fahrzeug, Vorhandensein eines Hindernisses.

**10.** Scheinwerfer (10) für ein Fahrzeug, umfassend eine Vorrichtung nach einem der Ansprüche 8 bis 9.

**11.** Scheinwerfer nach dem vorhergehenden Anspruch, umfassend eine Vielzahl von Lichtquellen (S1, S2, S3, S4), und bei dem die Vorrichtung angeordnet ist, um in Abhängigkeit vom identifizierten Beleuchtungsmodus die Aktivierung und Deaktivierung mindestens einer Lichtquelle unter der Vielzahl von Lichtquellen (S1, S2, S3, S4) und unabhängig von der Aktivierung und Deaktivierung der anderen Lichtquellen (S1, S2, S3, S4) zu steuern.

## Claims

**1.** Method for controlling the supply of power to a vehicle headlight (10) able to provide a high-beam and/or low-beam lighting function, comprising the following steps for at least one of the low-beam and high-beam functions:

- determining at least one driving parameter relevant to the lighting of the vehicle,
- defining a plurality of lighting modes **characterized by** the value of this at least one parameter,
- assigning, to each lighting mode, a mode for supplying power to the headlight,
- storing, in a memory, the power supply mode associated with each of the lighting modes,

each mode for supplying power to the headlight corresponding to a given voltage applied to the headlight (10) and/or corresponding to a given current applied to the headlight (10), and the headlight comprising a plurality of light sources (S1, S2, S3, S4), **characterized in that** each mode for supplying power to the headlight defines the activation or the deactivation of at least one light source (S1, S2, S3, S4) independently of the other light sources (S1, S2, S3, S4), **in that** the lighting provided by the headlight generates a luminous pattern (61, 62, 63, 64, 71, 72) and a luminous intensity, and **in that** the power supply modes are defined in such a way that the pattern (71, 72) is substantially identical for at least a plurality of power supply modes and in such a way that, for this plurality of power supply modes, the luminous intensity varies from one power supply mode to another.

**2.** Method according to the preceding claim, wherein the light sources (S1, S2, S3, S4) are incandescent lamps, light-emitting diodes or modules comprising a plurality of light-emitting diodes or a plurality of lamps.

**3.** Method according to either one of the preceding claims, wherein said at least one parameter comprises at least one parameter internal to the vehicle, chosen from among the following parameters: a speed of the vehicle, navigation data, an engine speed of the vehicle, the rotational speed of a steering wheel of the vehicle, the activation of the windscreen wipers and of the fog lights, an acceleration value, a speed or an angle of actuation of a brake or acceleration pedal, the initiation of a command from the driver.

**4.** Method according to any one of the preceding claims, wherein said at least one parameter comprises a parameter that conveys the state external to the vehicle, chosen from among the following parameters: ambient brightness, the brightness of public lighting, the brightness of natural lighting, the degree of pollution, the number of vehicles within a given perimeter, the distance from a vehicle in front, the relative speed and/or the acceleration with respect to a vehicle in front, a vehicle behind or an approaching vehicle, the colour of a road marking line, the information on a signpost, the presence of an obstacle, arrival at a crossing or at a roundabout, the presence of an urban environment, the presence of public lighting, the presence of a red light, the presence of fog, rain, snow or smoke, the detection of an obstacle.

**5.** Method according to any one of the preceding claims, wherein said at least one parameter comprises a parameter that conveys a traffic density, the traffic density being determined by navigation data reflecting the traffic density or by the speed of the vehicle in combination with at least one sub-parameter taken from among: the distance from a vehicle in front, the number of vehicles within a given perimeter, navigation data reflecting the traffic density.

**6.** Method according to any one of the preceding claims, wherein, when the vehicle is being used:

- values relating to said parameter are received,
- from among the plurality of lighting modes, the lighting mode corresponding to these values is identified,
- a mode for supplying power to the headlight depending on said lighting mode is determined.

**7.** Method according to any one of the preceding claims, wherein power supply modes are defined by performing the following steps:

- defining a desired lifetime for the headlight and/or a maximum desired power consumption of the headlight for a given period of use of the headlight,
- defining a predetermined driving profile **characterized by** a relative period of use of the headlight in each of the lighting modes,
- calculating, for each lighting mode, a power supply mode, in such a way that, with this power supply mode, the headlight provides satisfactory lighting for this lighting mode while at the same time having a lifetime close to the desired lifetime and/or while at the same time bringing about a power consumption close to the maximum desired power consumption for use corresponding to the predetermined driving profile.

**8.** Device for controlling the supply of power to a vehicle headlight (10) able to provide a high-beam and low-beam lighting function, comprising, for at least one of the low-beam and high-beam functions, a controller for:

- receiving values relating to at least one parameter relevant to the lighting of the vehicle,
- identifying, from among a plurality of lighting modes, a lighting mode corresponding to these values,
- determining a mode for supplying power to the headlight depending on the lighting mode identified,

**characterized in that** said device is configured to implement the method according to one of Claims 1 to 7.

**9.** Device according to the preceding claim, comprising at least one of the following means configured to receive the at least one parameter relevant to the lighting of the vehicle:

- means for detecting the number of vehicles in the proximity of said vehicle,
- means for detecting the distance between said vehicle and at least one vehicle in front,
- means for detecting the absolute speed of said vehicle,

- means for detecting the relative speed and/or the acceleration of said vehicle with respect to the vehicle in front, a vehicle behind or an approaching vehicle,
- means for detecting the colour of a road marking line,
- means for detecting the information on a signpost,
- means for detecting and measuring the ambient brightness,
- means for detecting the presence of an urban environment,
- means for detecting the presence of streetlights,
- means for detecting an obstacle,
- means for detecting the turning on of stop lights of a vehicle in front,
- a radar or a lidar configured to receive one of the following parameters: the number of vehicles in the proximity of said vehicle, the detection of a vehicle in front, the distance between said vehicle and a vehicle in front, the relative speed and/or the acceleration with respect to a vehicle in front, a vehicle behind or an approaching vehicle, the presence of an obstacle.

**10.** Headlight (10) for a vehicle, comprising a device according to either one of Claims 8 and 9.

**11.** Headlight according to the preceding claim, comprising a plurality of light sources (S1, S2, S3, S4) and wherein the device is designed so as to control, depending on the lighting mode identified, the activation and the deactivation of at least one light source taken from among the plurality of light sources (S1, S2, S3, S4) and independently of the activation and the deactivation of the other light sources (S1, S2, S3, S4).

FIG.1

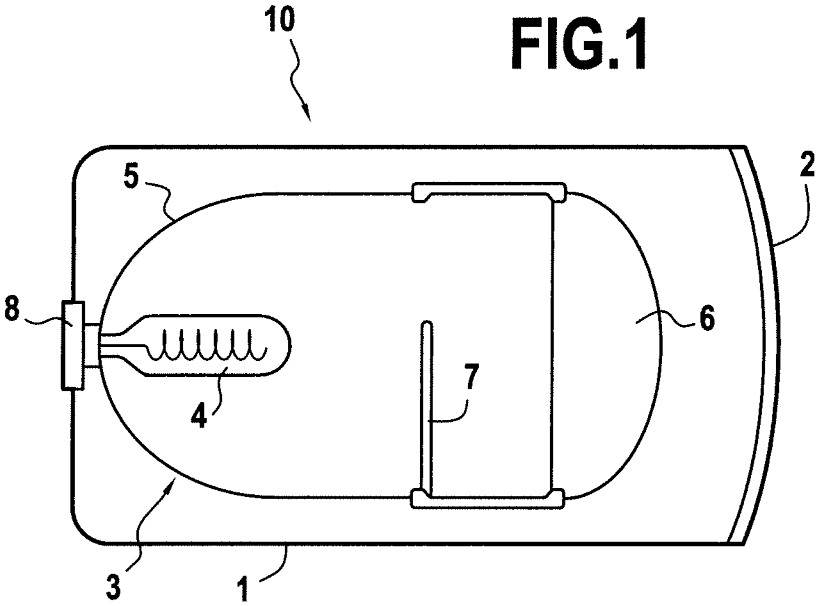
10
5
2
8
6
7
4
3
1

FIG.2

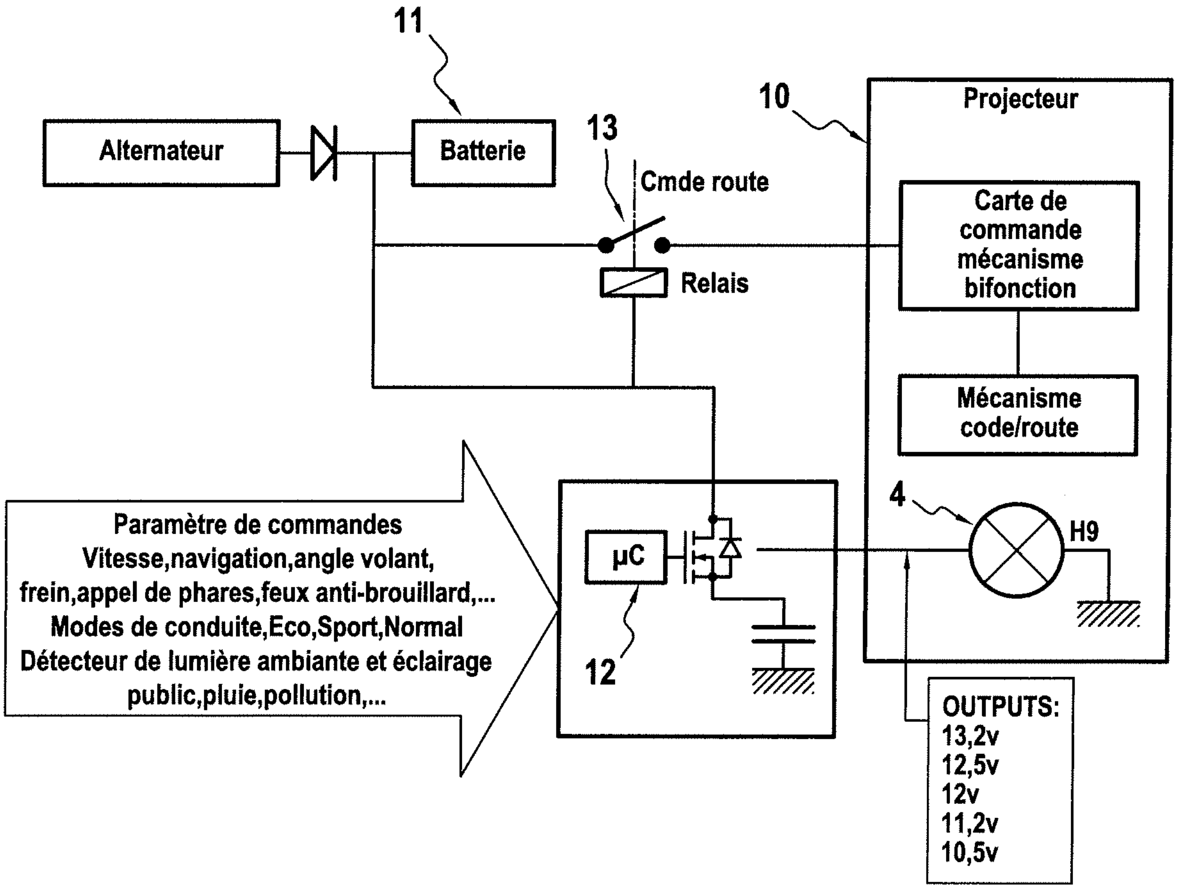
11
10
Projecteur
Alternateur
Batterie
13
Cmde route
Carte de commande mécanisme bifonction
Relais
Mécanisme code/route
4
H9
Paramètre de commandes
Vitesse,navigation,angle volant,
frein,appel de phares,feux anti-brouillard,...
Modes de conduite,Eco,Sport,Normal
Détecteur de lumière ambiante et éclairage
public,pluie,pollution,...
μC
12
OUTPUTS:
13,2v
12,5v
12v
11,2v
10,5v

| | Mode ville, nuit, petite vitesse | Mode ville, nuit, vitesse normale | Mode ville, crépuscule, vitesse normale | Mode code campagne, crépuscule, vitesse réduite | Mode code campagne, nuit, vitesse réduite | Mode code campagne, nuit, vitesse normale | Mode code campagne, crépuscule, vitesse normale |
|---|---|---|---|---|---|---|---|
| Capteur éclairage ambiant | < seuil 1 (nuit) | < seuil 1 (nuit) | < seuil 2 (crépuscule) | < seuil 2 (crépuscule) | < seuil 1 (nuit) | < seuil 1 (nuit) | < seuil 2 (crépuscule) |
| Capteur 100Hz éclairage ambiant | oui | oui | non | non | non | non | non |
| Info vitesse | <30km/h | 30<V<50km/h | V<50km/h | 50<V 70km/h | 50<V<70km/h | 70<V<90km/h | 70<V<90km/h |
| Mesure temps | >5s | >5s | >5s | >5s | >5s | >5s | >5s |
| Info accélération | N.A | N.A | N.A | N.A | N.A | N.A | N.A |
| Info Nav | oui/non | oui/non | oui/non | oui/non | oui/non | oui/non | oui/non |
| Vitesse volant | Non | Non | Non | Non | Non | Non | Non |
| | | | | | | | |
| **Tension appliquée à la lampe** | **10,5** | **11,2** | **10,5** | **11,2** | **12,2** | **12,8** | **12,2** |

| Mode route, crépuscule, vitesse normale | Mode route, nuit, vitesse réduite | Mode route, nuit, vitesse normale | Appel de phare | Mode code route rapide | Mode code autoroute | Mode DBL vitesse normale |
|---|---|---|---|---|---|---|
| < seuil 2 (crépuscule) | < seuil 1 (nuit) | < seuil 1 (nuit) | NA | < seuil 1 (nuit) | < seuil 1 (nuit) | < seuil 1 (nuit) |
| non | non | non | | non | non | non |
| 70<V<90km/h | 50<V<70km/h | V>70km/h | | V>100km/h | V>130km/h | V>70km/h |
| >5s | >5s | >5s | | >5s | >5s | >5s |
| N.A | N.A | N.A | | N.A | N.A | N.A |
| oui/non | oui/non | oui/non | | oui/non | oui/non | oui/non |
| Non | Non | Non | Non | Non | Non | oui/non |
| | | | | | | |
| **12,2** | **12,8** | **13,2** | **13,2** | **12,8** | **13,2** | **13,2** |

**FIG.3**

FIG.4

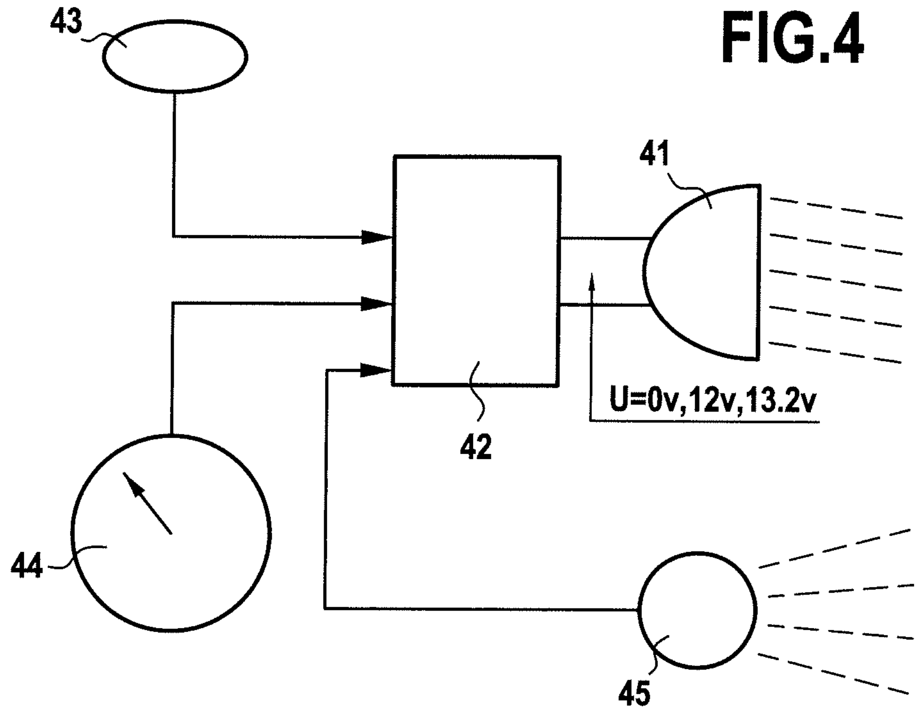


FIG.5

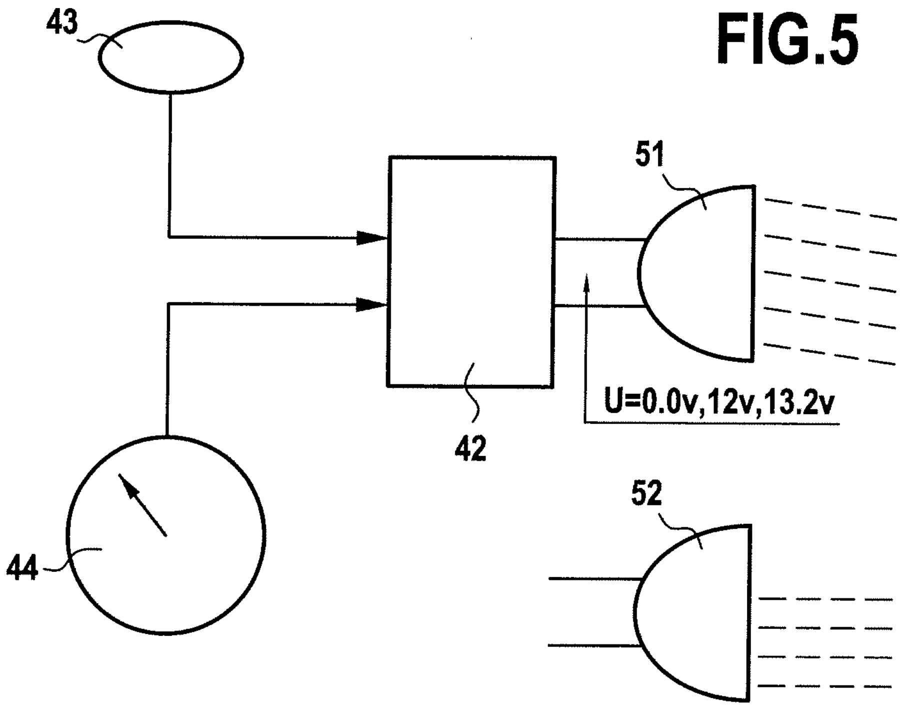

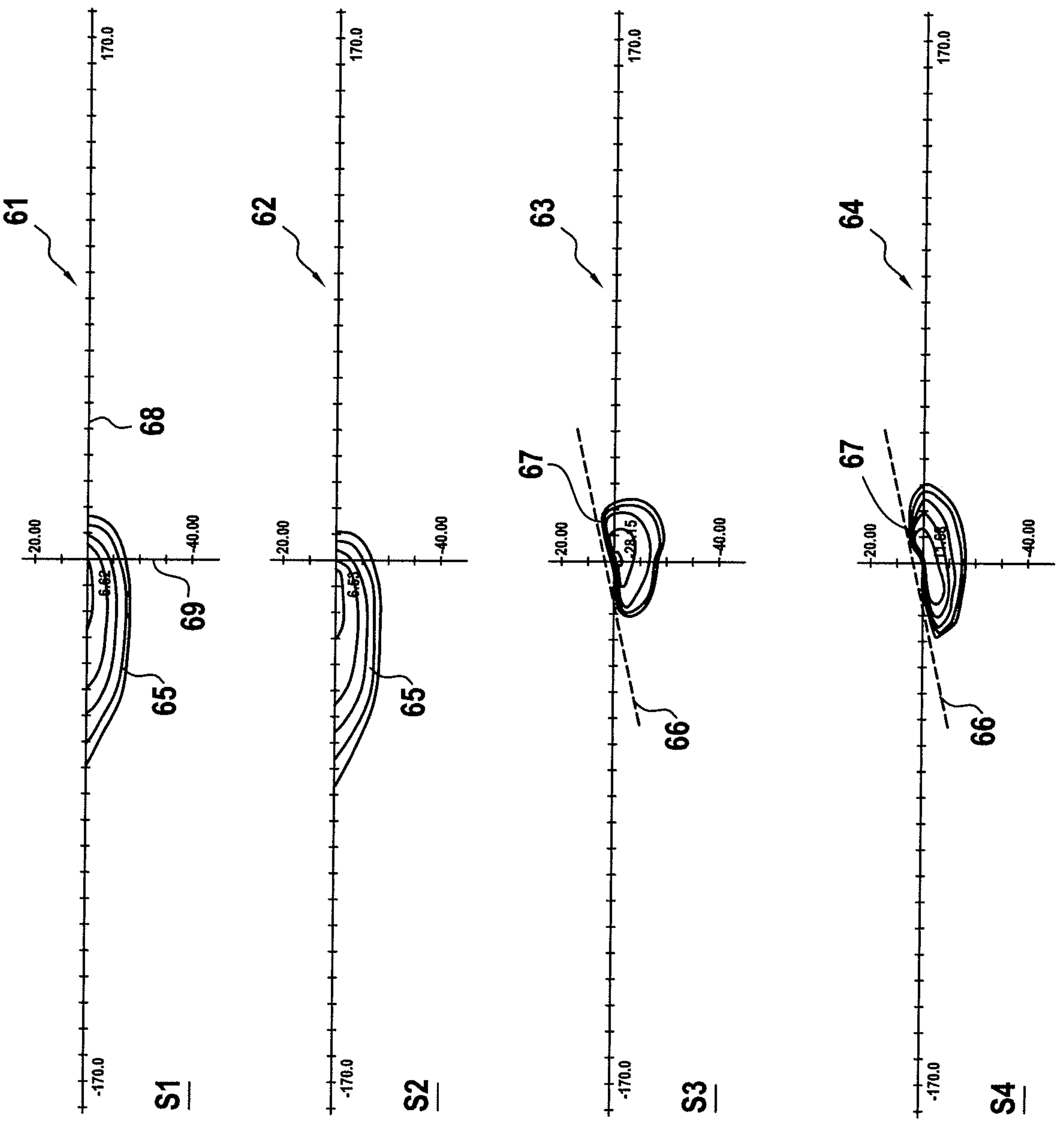


FIG.6

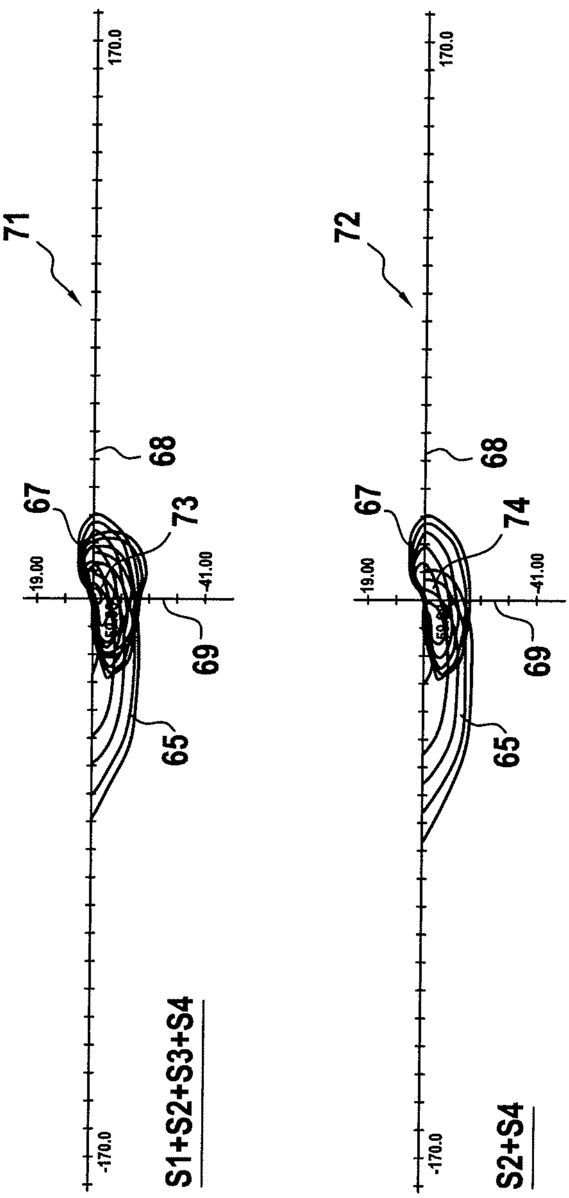


FIG.7

# Figure d'abrégé

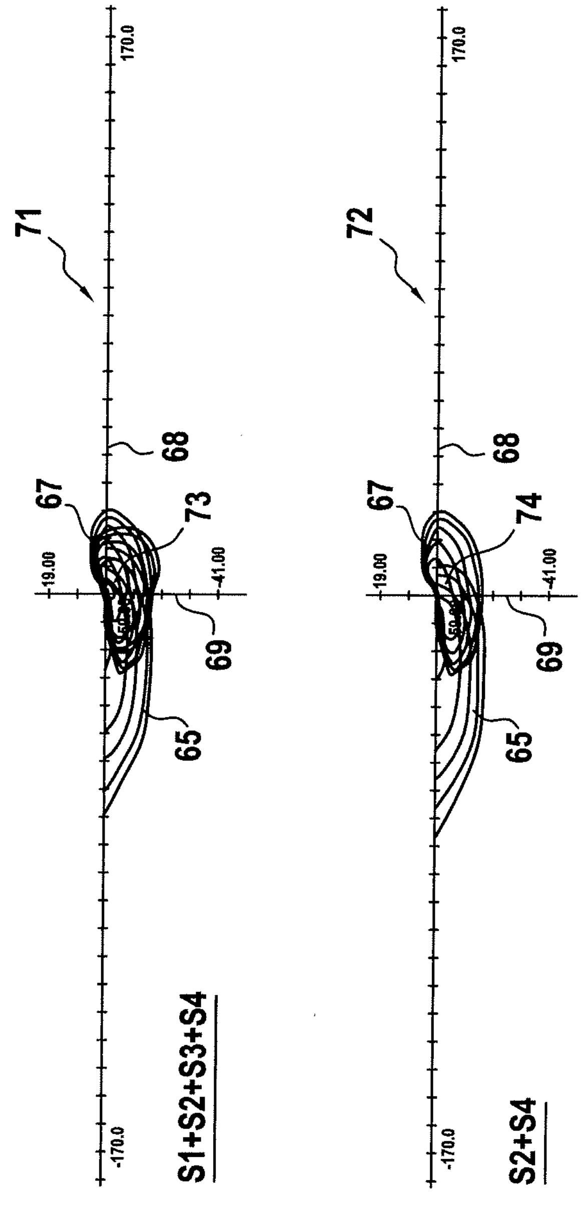


FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- DE 102006022022 A1
- EP 1566990 A1
- EP 1800948 A1
- DE 102006021694 A1
- US 20080007961 A